# EUROPEAN PATENT SPECIFICATION

(11) **EP 0 962 493 B1**
(45) Date of publication and mention of the grant of the patent: **23.10.2002**
(21) Application number: 99109386.5
(22) Date of filing: 02.06.1999
(51) Int. Cl.: C08L 23/14, C08J 5/18

(54) **Polyolefin resin composition and stretched film thereof**
Polyolefinharzzusammensetzung und daraus hergestellter, gestreckter Film
Composition de résine de polyoléfines et pellicule fabriquée à partir de celle-ci

(30) Priority: 03.06.1998 JP 17062698; 08.02.1999 JP 2971399; 08.02.1999 JP 3002399; 08.02.1999 JP 3035299; 12.02.1999 JP 3417099
(43) Date of publication of application: 08.12.1999
(73) Proprietor: Japan Polychem Corporation, Tokyo 100-0006 (JP)
(72) Inventor: Hirayama, Koichi, c/o Products R&D Center, Kawasaki-shi, Kanagawa (JP); Kanai, Gen, c/o Products R&D Center, Yokkaichi-shi, Mie (JP); Tsuyuki, Minoru, c/o Products R&D Center, Kawasaki-shi, Kanagawa (JP); Mizuno, Hajime, c/o Products R&D Center, Kawasaki-shi, Kanagawa (JP)
(74) Representative: VOSSIUS & PARTNER

(56) References cited:
- EP-A- 0 620 114
- EP-A- 0 667 360
- EP-A- 0 791 625
- DATABASE WPI Derwent Publications Ltd., London, GB; AN 98-126247 XP002115436 & JP 10 007816 A (MITSUBISHI), 13 January 1998 (1998-01-13)

## Description

This invention relates to a polyolefin resin composition providing a stretched polyolefin film excellent in transparency, slip properties, anti-blocking properties, scratch resistance, and resistance against fall-off of an anti-blocking agent incorporated therein and to a stretched polyolefin film obtained therefrom. The invention also relates to a biaxially stretched composite film excellent in transparency, slip properties, anti-blocking properties, scratch resistance, and resistance against fall-off of an anti-blocking agent, a biaxially stretched composite film excellent in transparency, sealability in low temperature, and scratch resistance which has suitability to high speed automatic packaging and hardly contaminates a packaging machine, and a biaxially stretched composite film which has improved anti-blocking properties, exhibits a satisfactory rise in heat sealing, and hardly contaminates film processing equipment.

Stretched polyolefin films, typically stretched polypropylene films, particularly biaxially stretched polypropylene films are widely used in packaging of e.g. food and fibers for their excellent transparency and mechanical characteristics. However, stretched polypropylene films have poor anti-blocking properties and slip properties because of their surface smoothness. To overcome this drawback, various studies have been given to date. For example, it has been proposed to add an anti-blocking agent, such as inorganic fine particles (see JP-B-52-16134) and organic fine particles (see JP-B-50-36262).

However, where inorganic fine particles are added as an anti-blocking agent, voids develop in a polyolefin resin film on stretching due to insufficient affinity of the inorganic particles to the polyolefin resin, resulting in impairment of transparency. Moreover, the uneven surface profile and hardness of the film cause scratches when the films slide on each other. Organic fine particles, for example, crosslinked polymethyl methacrylate particles (see JP-A-5-214120) also have insufficient affinity to polyolefin resins to form voids on stretching to impair transparency and, moreover, tend to fall off during conversion. Fall-off of an anti-blocking agent during conversion leads to reduction of film quality, such as development of printing dropouts and scratches.

The anti-blocking agents are to form unevenness on the film surface to improve anti-blocking properties and slip properties. On the other hand, they are apt to become nuclei for void formation to diminish transparency of the film.

In order to overcome the problems associated with anti-blocking agents, a biaxially stretched composite film having two or more layers has been proposed, which comprises a base layer solely or mainly comprising a crystalline propylene polymer having laminated on at least one side thereof a surface layer comprising a propylene polymer and an anti-blocking agent. Since the anti-blocking agent is incorporated only into the surface layer, anti-blocking properties and slip properties can be secured with a reduced amount of the anti-blocking agent so that reduction of transparency can be minimized. However, because of insufficient affinity of the anti-blocking agent to the propylene polymer in the surface layer, the stretched film still suffers from void formation, and the anti-blocking agent still tends to fall off during conversion, which leads to deterioration of film quality, such as dropouts of printing and scratches.

Biaxially stretched composite films, for example, biaxially stretched polypropylene films, which have a heat-sealable surface layer are widespread as a overlap packaging film for e.g. food, packs of cigarettes and tape cassettes for their excellent characteristics such as transparency and rigidity. The recent advancement of high speed automatic packaging machines has ever been increasing the demand for higher quality of films suitable to automatic packaging. Sealability in low temperature (low-temperature sealability) is one of the most important requirements for overlap packaging films. In order to afford low-temperature sealability to a polypropylene film, it has been proposed to laminate a polypropylene base layer with a surface layer made of a resin having low-temperature sealability, such as a propylene-ethylene random copolymer or a propylene-ethylene-butene-1 copolymer, to provide a biaxially stretched polypropylene film. The low-temperature sealability can further be improved by addition of a second component, such as polybutene-1, to the surface layer. As an approach to improve suitability to automatic packaging machines which are acquiring a higher speed, addition of inorganic fine particles, such as silica or calcium carbonate (see JP-B-4-30347), or organic fine particles, such as true spherical silicone resin particles (see JP-A-62-233248), has been proposed, which added an appreciable improvement on packaging film to be used on high-speed automatic packaging machines.

EP-A-0 620 114 relates to a biaxially-oriented multi-layer film comprising:
a substrate layer comprising as a main component a crystalline propylene polymer ; and
a layer of a composition laminated on at least one surface of the substrate layer, the composition comprising the following components A, B and C:
   component A:100 parts by weight of a propylene random copolymer,
   component B:0.05 to 0.6 parts by weight of inorganic or organic fine particles having an average particle diameter of 0.5 to 5 µm, and
   component C:0.5 to 10 parts by weight of a polypropylene modified with an acid, having a number-average molecular weight of 800 to 20,000.

EP-A-0 667 360 relates to a process for producing modified cross-linked polymer particles which comprises polymerizing 0.01 to 900 parts by weight of (B) a monomer component containing 50% by weight or more of at least one member selected from the group consisting of aromatic monoalkenyl compounds, acrylic acid esters, methacrylic acid esters, fluoroalkyl acrylates, fluoroalkyl methacrylates, unsaturated carboxylic acids, conjugated diene compounds, vinyl esters and organosilane compounds in the presence of 100 parts by weight of (A) cross-linked polymer particles obtained by polymerizing a monomer mixture comprising 50% by weight or more of at least one cross-linking monomer selected from the group consisting of divinylbenzene, ethylene glycol dimethacrylate and trimethylolpropane trimethacrylate.

JP-A-10-007816 relates to a shrink packaging propylene resin film prepared by sheeting a resin composition containing a propylene-alpha-olefin copolymer.

However, the known propylene random copolymer shows insufficient low-temperature sealability or an insufficient rise in heat sealing. An increase in the comonomer α-olefin (e.g., ethylene) content could bring about improved low-temperature sealability but results in development of stickiness (blocking), deterioration of slip properties, and deterioration of transparency with time.

It has additionally turned out that a biaxially stretched composite film comprising a biaxially stretched polypropylene film having a surface layer made of a low-temperature sealable resin containing inorganic or organic fine particles as an anti-blocking agent tends to allow the particles to fall off when used on a high speed automatic packaging machine over a long time to eventually contaminate the packaging machines. This tendency is more conspicuous with films that are more excellent in low-temperature sealability and transparency. The inventors of the present invention previously proposed addition of an acid-modified resin as a third component besides the fine particles (see JP-A-6-297657), which is deemed still unsatisfactory for coping with the ever increasing speed of packaging.

An object of the invention is to provide a polyolefin resin composition which provides a stretched polyolefin film excellent in transparency, slip properties, anti-blocking properties, scratch resistance, and resistance against fall-off of an anti-blocking agent and a stretched polyolefin film obtained therefrom.

Another object of the invention is to provide a biaxially stretched composite film excellent in transparency, anti-blocking properties, scratch resistance, and resistance against fall-off of an anti-blocking agent.

A further object of the invention is to provide a biaxially stretched composite film which is excellent in transparency, low-temperature sealability, scratch resistance, and resistance against fall-off of an anti-blocking agent and can therefore be used in high speed automatic packaging without contaminating packaging machines.

A still further object of the invention is to provide a biaxially stretched composite film which is suitable to automatic packaging, exhibits low-temperature sealability and an excellent rise in heat sealing without suffering from stickiness or deterioration of transparency, and hardly contaminates film processing equipment.

As a result of extensive investigations, it has been found that the above objects are accomplished by using crosslinked polymer particles prepared by copolymerizing a carboxyl-containing monomer as an anti-blocking agent and using an acid-modified polyolefin as a compatibilizer. The crosslinked polymer particles exhibit increased compatibility with a polyolefin resin matrix and are firmly held in the matrix resin.

The present invention provides in its first aspect a polyolefin resin composition comprising:
(A) 100 parts by weight of a polyolefin resin,
(B) 0.05 to 1.0 part by weight of crosslinked polymer particles having a volume-average particle size of 0.3 to 10 µm which comprise (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methylstyrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(C) 0.01 to 5 parts by weight of an acid-modified polyolefin resin having an acid value of 1.0 to 100 mg-KOH/g as specified in JIS K0070;
and a stretched polyolefin film obtained by stretching the polyolefin resin composition at least uniaxially.

The invention provides in its second aspect a biaxially stretched composite film comprising a base layer solely or mainly comprising a crystalline propylene polymer having provided on at least one side thereof a layer made of a composition comprising:
(A-1) 100 parts by weight of a propylene polymer,
(B) 0.05 to 1.0 part by weight of crosslinked polymer particles having a volume-average particle size of 0.3 3 to 10 µm which comprise (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methylstyrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(c) 0.01 to 5 parts by weight of an acid-modified polyolefin resin having an acid value of 1.0 to 100 mg-KOH/g as specified in JIS K0070.

The invention provides in its third aspect a biaxially stretched composite film comprising a base layer solely or mainly comprising a crystalline propylene polymer having provided on at least one side thereof a layer made of a composition comprising:
(A-2) 100 parts by weight of a propylene random copolymer,
(B) 0.05 to 1.0 part by weight of crosslinked polymer particles having a volume-average particle size of 0.3 to 10 µm which comprise (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methylstyrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(C) 0.01 to 5 parts by weight of an acid-modified polyolefin resin having an acid value of 1.0 to 100 mg-KOH/g as specified in JIS K0070.

The invention provides in its fourth aspect a biaxially stretched composite film according to the third aspect, wherein the propylene random copolymer has (1) a melt peak temperature T_{P}, as measured by differential scanning calorimetry (DSC), of from 110°C to 140°C, (2) a melt end temperature T_{E}, as measured by DSC, satisfying the relationship: T_{E}-T_{P}≤8°C, and (3) an o-dichlorobenzene extractability of 2.0% by weight or less at 40°C.

### I. Polyolefin resin (component (A))

The polyolefin resin which can be used as component (A) includes homo- or copolymers of e.g. propylene, ethylene, butene-1, hexene-1 and 4-methylpentene-1, and mixtures thereof. Polypropylene resins, which are known polymers mainly comprising propylene, are preferred. Examples of useful polypropylene resins are a propylene homopolymer, copolymers of propylene and other α-olefins, such as a propylene-ethylene copolymer, a propylene-butene-1 copolymer, and a propylene-ethylene-butene-1 copolymer, and mixtures thereof. If necessary, these polypropylene resins can be used in combination with polyethylene, polybutene-1, a styrene resin, an ethylene-propylene copolymer rubber, an ethylene-propylene-diene copolymer rubber, and so forth.

### II. Crosslinked polymer particles (Component (B))

The crosslinked polymer particles which serve as an anti-blocking agent are a particulate copolymer comprising (1) a radically polymerizable monomer unit containing a carboxyl group, (2) a radically polymerizable monomer unit copolymerizable with monomer (1), and (3) a crosslinking monomer unit. The crosslinked polymer particles may have double- or multi-layer structure at least the outermost layer of which has the above-described composition. The crosslinked polymer particles are not particularly limited in shape, but substantially spherical particles are preferred.

The radically polymerizable monomer containing a carboxyl group per molecule includes acrylic acid, methacrylic acid, α-chloroacrylic acid, α-bromoacrylic acid, crotonic acid, cinnamic acid, fumaricacid, maleicacid, and anhydrides thereof. The ratio of the radically polymerizable monomer unit containing a carboxyl group to the total monomer units is 1 to 50% by weight, preferably 1 to 20% by weight. If it is less than 1% by weight, voids are formed on stretching to deteriorate transparency, and the crosslinked polymer particles fall off. If it exceeds 50% by weight, the particles agglomerate.

The monomer copolymerizable with the radically polymerizable monomer containing a carboxyl group includes (meth)acrylate monomers, such as methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methylstyrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone. These monomers may be used as a combination of two or more thereof. The ratio of this monomer unit to the total monomer units is 49 to 98% by weight, preferably 51 to 96% by weight. If it is less than 49% by weight, spherical particles having a narrow particle size distribution are not obtained, and physical properties of the film, such as optical characteristics and suitability to high speed automatic packaging, are deteriorated. If it exceeds 98% by weight, physical properties of the film, such as heat resistance, fall-off resistance, and suitability to high speed automatic packaging, are deteriorated.

The crosslinking monomer includes acrylate monomers, such as ethylene glycol diacrylate, diethylene glycol diacrylate, triethylene glycol diacrylate, decaethylene glycol diacrylate, pentadecaethylene glycol diacrylate, 1,3-butylene diacrylate, allyl acrylate, pentaerythritol tetraacrylate, diethylene glycol diacrylate phthalate, pentacontahectaethylene glycol dimethacrylate, pentacontahectaethylene glycol diacrylate, tetraethylene glycol diacrylate, tetraethylene glycol dimethacrylate, pentaerythritol triacrylate, pentaerythritol trimethacrylate, 1,1,1-trishydroxymethylethane diacrylate, 1,1,1-trishydroxymethylethane triacrylate, 1,1,1-trishydroxymethylpropane triacrylate, trimethylolpropane triacrylate, ethylene glycol dimethacrylate, diethylene glycol dimethacrylate, triethylene glycol dimethacrylate, decaethylene glycol dimethacrylate, pentadecaethylene glycol dimethacrylate, 1,3-butylene dimethacrylate, allyl methacrylate, trimethylolpropane trimethacrylate, pentaerythritol tetramethacrylate, and diethylene glycol dimethacrylate phthalate; aromatic divinyl compounds, such as divinylbenzene, divinylnaphthalene, and derivatives thereof; crosslinking agents, such as N,N-divinylaniline, divinyl ether, divinyl sulfide, and divinylsulfone; polybutadiene, polyisoprene, and unsaturated polyesters. The ratio of the crosslinking monomer unit to the total monomer units is 1 to 20% by weight, preferably 3 to 18% by weight. If it is less than 1% by weight, the degree of crosslinking is insufficient for preventing thermal decomposition in molding into film, resulting in deterioration of film properties, such as optical characteristics and suitability to high speed automatic packaging, and of workability, for example, generation of an unpleasant odor or contamination of the die. If it exceeds 20% by weight, the resulting crosslinked polymer particles are so hard as to deteriorate the film properties, such as scratch resistance.

Copolymerization of the radically polymerizable monomer containing a carboxyl group, the copolymerizable monomer, and the crosslinking monomer can be carried out by e.g. emulsion polymerization, dispersion polymerization, suspension polymerization, soap-free polymerization, seed polymerization, swell polymerization, microsuspension polymerization and graft polymerization.

The particle size of the crosslinked polymer particles is 0.3 to 10 µm, preferably 0.7 to 3 µm, in terms of volume-average particle size. Particles smaller than 0.3 µm fail to afford sufficient anti-blocking properties or suitability to high speed automatic packaging. Particles greater than 10 µm induce considerable stress concentration at the interface with a polyolefin resin matrix to cause interfacial separation. As a result, voids develop at the interface to deteriorate transparency, resistance to fall-off, and scratch resistance.

### III. Acid-modified polyolefin resin (Component (C))

The acid-modified polyolefin resin which can be used as a compatibilizer is a polyolefin resin with at least part of the terminals thereof modified with an acid. It has an acid value of 1.0 to 100 mg-KOH/g, preferably 5 to 60 mg-KOH/g, as specified in JIS K0070. If the acid value is less than 1.0 mg-KOH/g, the resulting film has deteriorated transparency and allows the crosslinked polymer particles to fall off. If it exceeds 100 mg-KOH/g, workability is reduced.

The polyolefin to be acid-modified is selected from those useful as component (A). Illustrative examples are homo- or copolymers of propylene, ethylene, butene-1, hexane-1, 4-methylpentene-1, etc. and mixtures thereof. Low-molecular polypropylene is preferred.

Acid-modified low-molecular polypropylene (hereinafter sometimes referred to as acid-modified low-molecular PP) has a number average molecular weight of 800 to 20,000, preferably 1,000 to 18,000. The acid-modified low-molecular PP has at least part of its terminals modified with an acid as prepared by chemically adding an unsaturated carboxylic acid and/or an anhydride thereof to low-molecular polypropylene having a double bond in its terminal or by molecular weight reduction of acid-modified high-molecular polypropylene. The acid-modified polypropylene obtained by acid modification usually has a softening point of 130 to 170°C, preferably 140 to 160°C.

The low-molecular polypropylene having a double bond in its terminals preferably has 1 to 10, particularly 2 to 7, terminal double bonds per 1,000 carbon atoms and a number average molecular weight of 800 to 20,000, particularly 1,000 to 18,000. Low-molecular polypropylene with a smaller terminal double bond content tends to be difficult to modify with an acid to a desired degree. Low-molecular polypropylene with a greater terminal double bond content tends to provide an acid-modified low-molecular PP having insufficient heat resistance. If the number average molecular weight exceeds the above range, the effect in preventing fall-off of crosslinked polymer particles tends to be lessened.

The acid modification can be achieved by melt grafting or solution grafting. Melt grafting is carried out usually at 100 to 270°C, preferably 130 to 240°C, for 0.5 to 30 hours, preferably 1 to 20 hours. Solution grafting is performed by reacting the polyolefin in a completely dissolved state in xylene with an unsaturated carboxylic acid and/or an anhydride thereof in the presence of a peroxide usually at a temperature of 120 to 180°C, preferably 140 to 160°C, for a period of 1 to 20 hours, preferably 3 to 15 hours. The acid-modified polymer thus formed is precipitated in a large quantity of e.g. acetone. It is preferred for the resulting acid-modified polyolefin to have the unsaturated carboxylic acid and/or the anhydride thereof in an amount of 0.01 to 20% by weight, particularly 0.05 to 15% by weight, especially 0.1 to 10% by weight.

The unsaturated carboxylic acid and anhydride thereof which are useful as a modifier include acrylic acid, methacrylic acid, maleic acid, fumaric acid, itaconic acid, citraconic acid, nudic acid, maleic anhydride, itaconic anhydride, citraconic anhydride, allylsuccinic anhydride, and nudic anhydride. Preferred of them is maleic anhydride.

component (C) may be an acid-modified polyolefin diluted with a non-modified polyolefin. Commercially available acid-modified polyolefins, for example a series of maleic anhydride-modified polypropylene products available from Sanyo Chemical Industries, Ltd. under a trade name "Umex" can be made use of.

### IV. Polyolefin resin composition

The polyolefin resin composition according to the present invention comprises the polyolefin resin as component (A), the crosslinked polymer particles as component (B), and the acid-modified polyolefin resin as component (C). The proportions of components (B) and (C) are 0.05 to 1 part by weight, preferably 0.07 to 0.5 part by weight, and 0.01 to 5 parts by weight, respectively, per 100 parts by weight of component (A). Less than 0.05 part of component (B) is insufficient for securing satisfactory slip properties and anti-blocking properties, and more than 1 part of component (B) results in deteriorated transparency. Less than 0.01 part of component (C) is insufficient for improving transparency and preventing fall-off of component (B). More than 5 parts of component (C) results in deterioration of workability in film formation.

The polyolefin resin composition of the invention provides a stretched film which exhibits improved anti-blocking properties as well as satisfactory transparency and is prevented from releasing the crosslinked polymer particles (component (B)).

The polyolefin resin composition of the invention can be prepared in any manner that makes the crosslinked polymer particles and the acid-modified polyolefin resin be dispersed uniformly in the polyolefin resin. For example, all the components (A), (B) and (C) are dry blended in e.g. a ribbon blender or a Henschel mixer, and then melt kneaded in an extruder. If desired, necessary additives, such as antioxidants, antistatic agents, neutralizing agents and slip agents, can be added in melt kneading.

The polyolefin resin composition is required to have the above-specified proportions of components (A), (B) and (c) in the final stage of producing a stretched film. In other words, it is possible to prepare a high concentration masterbatch that is to be diluted to a predetermined concentration on film formation by, for example, dry blending.

### v. Stretched film

The stretched film is obtained by melt extruding the polyolefin resin composition into film and, after chilling, stretching the film at least uniaxially in a conventional manner.

while not limiting, the stretched film usually has a thickness of 200 µm or less, preferably 5 to 100 µm, still preferably 10 to 50 µm.

The stretched film may be used as such (a single-layer film) or as a layer of a laminate film having two or more layers. In the latter case, the film of the polyolefin resin composition according to the present invention is preferably used as a surface layer on one or both sides of the composite film. A laminate film is prepared by co-extrusion or dry laminating.

### VI. Biaxially stretched composite film

The biaxially stretched composite film according to the present invention comprises a base layer solely or mainly comprising a crystalline propylene polymer and a surface layer provided on at least one side of the base layer, the surface layer being made of the above-described polyolefin resin composition comprising components (A), (B), and (C).

### VI-1. Base layer

The crystalline propylene polymer which is an essential component forming the base layer of the biaxially stretched composite film includes a propylene homopolymer and a random, block or graft copolymer comprising propylene in a major proportion and comonomers, such as other α-olefins (e.g., ethylene, butene, hexene, 4-methylpentene, and octene), unsaturated carboxylic acids or derivatives thereof (e.g., acrylic acid and maleic anhydride), and aromatic vinyl monomers (e.g., styrene) in a minor proportion. The crystalline propylene polymer preferably has an isotactic index (hereinafter abbreviated as I.I) of 40% or higher, particularly 60% or higher, especially 80% or higher. That is, a propylene homopolymer is the most preferred. From the standpoint of bending stiffness of the film, adhesion of the film on packaging machine, and suitability to high speed automatic packaging, propylene homopolymers having an I.I of 90% or higher, particularly 95% or higher, especially 98% or higher are preferably used. The crystalline propylene polymer preferably has a melt flow rate (MFR) of 0.5 to 10 g/10 min, particularly 1 to 5 g/10 min. These crystalline propylene polymers can be used either individually or as a mixture of two or more thereof.

A polyblend comprising the crystalline propylene polymer as a main component can also be used as a base layer. For example, in addition to the crystalline propylene polymer, the base layer can contain other compounding ingredients within a range that does not impair the essential characteristics as a base layer, for example, in a proportion of not greater than 30% by weight. useful compounding ingredients include other thermoplastic resins, such as hydrocarbon resins (inclusive of their hydrogenation products), such as an ethylene polymer, a butene polymer, a petroleum resin, a terpene resin, and a styrene resin.

If desired, the base layer may further contain compounding additives, such as stabilizers (antioxidants or weathering agents), processing aids, colorants, antistatic agents, slip agents, and anti-blocking agents other than the crosslinked polymer particles. Addition of an antistatic agent is particularly recommended. Examples of preferred antistatic agents are glycerol fatty acid esters, alkylamines, alkylamine-ethylene oxide adducts and fatty acid esters thereof. without satisfactory antistatic properties, films would tend to accumulate static electricity during running to have poor adhere the film on packaging machine.

### VI-2. Surface layer

The surface layer, which is provided on at least one side of the base layer, is formed of the polyolefin resin composition comprising components (A), (B), and (C). The polyolefin resin used as component (A) is preferably (A-1) a propylene polymer or (A-2) a propylene random copolymer.

### Component (A):

The propylene polymer (A-1) includes a propylene homopolymer and a random, block or graft copolymer comprising propylene in a major proportion and comonomers, such as other α-olefins (e.g., ethylene, butene, hexene, 4-methylpentene, and octene) and aromatic vinyl monomers (e.g., styrene), in a minor proportion. Such crystalline propylene polymers preferably have an I.I of 40% or higher, particularly 60% or higher, especially 80% or higher. That is, a propylene homopolymer is preferred. A propylene homopolymer having an I.I of 90% or higher, particularly 95% or higher, and an MFR of 0.5 to 20 g/10 min, particularly 1 to 10 g/10 min, is still preferred. The above-described propylene polymers can be used either individually or as a mixture of two or more thereof. A polyblend comprising the crystalline propylene polymer as a main component is also preferred as a propylene polymer (A-1).

The surface layer comprising the polyolefin resin composition containing the propylene polymer (A-1) may contain other compounding ingredients within a range that does not impair the essential characteristics as a surface layer, for example, in a proportion of not greater than 30% by weight. Useful compounding ingredients include other thermoplastic resins, such as hydrocarbon resins (inclusive of their hydrogenation products), such as an ethylene polymer, a butene polymer, a petroleum resin, a terpene resin, and a styrene resin. If desired, the surface layer may further contain compounding additives, such as stabilizers (antioxidants or weathering agents), processing aids, colorants, antistatic agents, and slip agents.

The propylene random copolymer (A-2) which can be preferably used in the surface layer includes a propylene-ethylene random copolymer, a propylene-butene-1 random copolymer, and a propylene-ethylene-butene-1 random copolymer. The propylene-ethylene random copolymer suitably has an ethylene content of 2 to 10% by weight, preferably 3 to 8% by weight, particularly preferably 4 to 6% by weight. with an ethylene content of less than 2%, heat sealability tends to reduce. with an ethylene content exceeding 10%, the film tends to become sticky and to have reduced scratch resistance. The above propylene-butene-1 random copolymer suitable has a butene-1 content of 1 to 40% by weight, preferably 2 to 35% by weight, particularly preferably 3 to 30% by weight. with a butene-1 content of less than 1%, heat sealability tends to reduce. with a butene-1 content exceeding 40%, the film tends to become sticky and to have reduced scratch resistance. The propylene-ethylene-butene-1 random copolymer suitably has an ethylene content of 0.3 to 6% by weight, preferably 0.5 to 5% by weight, particularly preferably 1 to 4% by weight, and a butene-1 content of 2 to 30% by weight, preferably 3 to 25% by weight, particularly preferably 5 to 20% by weight. with a smaller ethylene or butene-1 content, heat sealability tends to diminish. with a greater ethylene or butene-1 content, the resulting film tends to have stickiness and reduced scratch resistance. The propylene random copolymer (A-2) usually has an MFR of 0.4 to 100 g/10 min, preferably 0.5 to 50 g/10 min, still preferably 1 to 20 g/10 min, particularly preferably 2 to 10 g/10 min.

The surface layer comprising the polyolefin resin composition containing the propylene random copolymer (A-2) can contain other compounding ingredients to bring about further improvements or for other purposes. For example, the polyolefin resin composition may further comprise 5 to 45 parts by weight of a crystalline butene-1 polymer or a propylene-butene-1 copolymer per 100 parts by weight of the propylene random copolymer (A-2) to have further improved low-temperature sealability. The crystalline butene-1 polymer includes a butene-1 homopolymer and a copolymer of butene-1 and other α-olefins (e.g., ethylene and propylene). A butene-1 copolymer whose MFR at a given temperature within a range of from 180° up to 300°C is equal to or greater than that of the propylene random copolymer (A-2) is preferred for improving transparency. Addition of organic slip agents of various kinds, such as silicon oil and silicone rubber, is preferred for improving suitability to high speed packaging. It is particularly recommended to add, as a slip agent, diorganopolysiloxane rubber having a degree of polymerization of 3,500 to 8,000 or silicone oil having a viscosity of 100 to 100,000 cSt in an amount of 0.1 to 2 parts by weight per 100 parts by weight of the propylene random copolymer (A-2).

In the embodiment of the biaxially stretched composite film of the invention where the surface layer is made of the polyolefin resin composition comprising the propylene random copolymer (A-2), it is particularly preferred to use a propylene random copolymer having the following physical properties (1) to (3) (hereinafter referred to as propylene random copolymer (A-2')).

### (1) Melt peak temperature in DSC (T_{P})

The melt peak temperature in DSC (T_{P}) of the propylene random copolymer (A-2') is from 110°C to 140°C, preferably from 115°C to 135°C. A propylene random copolymer whose T_{P} is lower than 110°C being used, the resulting film tends to become sticky and to have reduced suitability to high speed automatic packaging even with the aid of component (B). A propylene random copolymer whose T_{P} is higher than 140°C being used, the resulting film tends to have reduced low-temperature sealability.

### (2) Melt end temperature in DSC (T_{E})

The melt end temperature in DSC (T_{E}) of the propylene random copolymer (A-2') satisfies the relationship: T_{E}-T_{P}≤8°C, preferably T_{E}-T_{P}≤7.8°C. Such a limited difference between T_{E} and T_{P} secures a satisfactory rise in heat sealing.

### (3) o-Dichlorobenzene extractability

The o-dichlorobenzene extractability of the propylene random copolymer (A-2') at 40°C is 2.0% by weight or less, preferably 1.5% by weight or less. A propylene random copolymer having an o-dichlorobenzene extractability (at 40°C) higher than 2.0% by weight tends to show stickiness even with the aid of component (B).

As previously stated as for the propylene random copolymer (A-2), the propylene random copolymer (A-2') having the above-mentioned specific physical properties (1) to (3) usually has an MFR (230°C, 216 kg-load ) of 0.4 to 100 g/10 min, preferably 0.5 to 50 g/10 min, still preferably 1 to 20 g/10 min, particularly preferably 2 to 10 g/10 min.

The propylene random copolymer (A-2') having the above-mentioned specific physical properties (1) to (3) can be obtained by random copolymerization of propylene and a copolymerizable monomer(s) in the presence of a catalyst system comprising (a) a catalyst component which is a metallocene compound represented by formula (I):

Q¹(C₅H₄₋ₐR¹ ₐ)(C₅H_{4-b}R² _{b})MeX¹Y¹ (I)

wherein the symbols are hereinafter defined, (b) a catalyst component selected from the group consisting of (b-1) an aluminumoxy compound, (b-2) a Lewis acid or an ionic compound capable of reacting with catalyst component (a) to convert the catalyst component (a) to a cation, and (b-3) clay, clay mineral or an ion exchanging layer compound and, if desired, (c) an organoaluminum compound.

### Catalyst Component (a):

Catalyst component (a) is a metallocene compound represented by formula (I). In formula (I), Q¹ represents a linking group bridging over the two conjugated 5-membered cyclic ligands, i.e., (C₅H₄₋ₐR¹ₐ) and (C₅H_{4-b}R²_{b}), which is selected from a divalent hydrocarbon group having 1 to 20 carbon atoms, a silylene group having a hydrocarbon group containing 1 to 20 carbon atoms, and a germylene group having a hydrocarbon group containing 1 to 20 carbon atoms; Me represents zirconium or hafnium; X¹ and Y¹, which may be the same or different, each represent a hydrogen atom, a halogen atom, a hydrocarbon group containing 1 to 20 carbon atoms, an alkoxy group containing 1 to 20 carbon atoms, an alkylamido group containing 1 to 20 carbon atoms, a trifluoromethanesulfonic acid group, a phosphorus-containing hydrocarbon group containing 1 to 20 carbon atoms or a silicon-containing hydrocarbon group containing 1 to 20 carbon atoms; R¹ and R² each independently represent a hydrocarbon group containing 1 to 20 carbon atoms, a halogen atom, an alkoxy group, a silicon-containing hydrocarbon group, a phosphorus-containing hydrocarbon group, a nitrogen-containing hydrocarbon group or a boron-containing hydrocarbon group; a and b each represent an integer of 0 to 4; two R^{1'}s on adjacent carbon atoms or two R^{2'}s on adjacent carbon atoms may be connected to each other to form a ring; and the two 5-membered cyclic ligands are asymmetrical about the plane containing Me with respect to the relative position via the linking group Q¹.

Q¹ is a linking group bridging over the two conjugated 5-membered cyclic ligands which is selected from (i) a divalent hydrocarbon group having 1 to 20 carbon atoms, preferably 1 to 6 carbon atoms, more specifically a divalent unsaturated hydrocarbon group, such as an alkylene group, a cycloalkylene group, or an arylene group, (ii) a silylene group having a hydrocarbon group containing 1 to 20, preferably 1 to 12, carbon atoms, and (iii) a germylene group having a hydrocarbon group containing 1 to 20, preferably 1 to 12, carbon atoms. where the linking group Q¹ is acyclic, its length, i.e., the distance between the two 5-membered cyclic ligands, is preferably 4 or less atoms, particularly 3 atoms or less, irrespective of the number of carbon atoms. where Q₁ has a cyclic group, the distance is preferably (the cyclic group + 2 or less atoms), particularly only the cyclic group. Accordingly, the alkylene group as Q¹ is preferably an ethylene group or an isopropylidene group (the distance between the two ligands is 2 atoms or 1 atom, respectively); the cycloalkylene group as Q¹ is preferably a cyclohexylene group (the distance is only the cyclohexylene group); and the alkylsilylene group as Q₁ is preferably a dimethylsilylene group (the distance is one atom).

In formula (I), Me is zirconium or hafnium, preferably zirconium, and X¹ and Y¹, which may be the same or different, each represent a hydrogen atom, a halogen atom (i.e., fluorine, chlorine, bromine or iodine, preferably chloride), a hydrocarbon group containing 1 to 20 carbon atoms, an alkoxy group containing 1 to 20 carbon atoms, an alkylamido group containing 1 to 20 carbon atoms, a trifluoromethanesulfonic acid group, a phosphorus-containing hydrocarbon group containing 1 to 20 carbon atoms or a silicon-containing hydrocarbon group containing 1 to 20 carbon atoms.

R¹ and R² each independently represent a hydrocarbon group containing 1 to 20 carbon atoms, a halogen atom, an alkoxy group, a silicon-containing hydrocarbon group, a phosphorus-containing hydrocarbon group, a nitrogen-containing hydrocarbon group or a boron-containing hydrocarbon group, and a and b each represent an integer of 0 to 4. Two R^{1'} S on adjacent carbon atoms or two R^{2'} S on adjacent carbon atoms may be connected to each other to form a ring.

Illustrative examples of the metallocene compound represented by formula (I) are shown below.
(a-1) Transition metal compounds having two silylene-bridged 5-membered cyclic ligands, such as dimethylsilylenebis(1-indenyl)zirconium dichloride, dimethylsilylenebis{1-(4,5,6,7-tetrahydroindenyl)}zirconium dichloride, dimethylsilylenebis{1-(2,4-dimethylindenyl)}zirconium dichloride, dimethylsilylenebis{1-(2-methyl-4-phenylindenyl)}zirconium dichloride, dimethylsilylenebis{1-(2-methyl-4,5-benzoindenyl)}zirconium dichloride, dimethylsilylenebis[1-{2-methyl-4-(1-naphthyl)indenyl}]zirconium dichloride, dimethylsilylenebis{1-(2-methyl-4-isopropylindenyl)}zirconium dichloride, dimethylsilylenebis{1-(2-methyl-4,6-diisopropylindenyl)}zirconium dichloride, dimethylsilylenebis{1-(2-methylindenyl)}zirconium dichloride, methylphenylsilylenebis(1-indenyl)zirconium dichloride, methylphenylsilylenebis{1-(4,5,6,7-tetrahyd roindenyl)}zirconium dichloride, methylphenylsilylenebis{1-(2,4-dimethylindenyl)}zirconium dichloride, methylphenylsilylenebis{1-(2-methyl-4-phenylindenyl)}zirconium dichloride, methylphenylsilylenebis{1-(2-methyl-4,5-benzoindenyl)}zirconium dichloride, methylphenylsilylenebis[1-{2-methyl-4-(1-naphthyl)indenyl}]zirconium dichloride, methylphenylsilylenebis{1-(2-methyl-4-isopropylindenyl)}zirconium dichloride, methylphenylsilylenebis{1-(2-methyl-4,6-diisopropylindenyl)}zirconium dichloride, methylphenylsilylenebis{1-(2-methylindenyl)}zirconium dichloride, dimethylsilylenebis{1-(2-methyl-4,5-benzoindenyl)}zirconiumdimethyl, dimethylsilylenebis{1-(2-methyl-4,5-benzoindenyl)}zirconiummethyl chloride, dimethylsilylenebis{1-(2-methyl-4-phenylindenyl)}zirconiumdimethyl, dimethylsilylenebis{1-(2-methyl-4-phenylindenyl)}zirconium chlorodimethylamide, dimethylsilylenebis{1-(2-methyl-4-phenyl-hydroazulenyl)}zirconium dichloride, dimethylsilylenebis{1-(2-methyl-4-phenyl-4,5,6,7,8-pentahydroazulenyl)}zirconium dichloride, dimethylsilylenebis[1-{2-methyl-4-(1-naphthyl)-4-hydroazulenyl}]zirconium dichloride, dimethylsilylenebis[1-{2-methyl-4-(1-naphthyl)-4,5,6,7,8-pentahydroazulenyl}]zirconium dichloride, methylphenylsilylenebis{1-(2-methyl-4-phenyl-4,5,6,7,8-pentahydroazulenyl}zirconium dichloride, dimethylsilylenebis{1-(2-ethyl-4,5-benzoindenyl)}zirconium dichloride, dimethylsilylenebis{1-(2-ethyl-4-phenylindenyl)}zirconium dichloride, dimethylsilylenebis{1-(2-ethyl-4-phenylhydroazulenyl)}zirconium di chloride, dimethylsilylenebis{1-(2-ethyl-4-phenyl-4,5,6,7,8-pentahydroazulenyl)}zirconium dichloride, dimethylsilylene-{1-(2-ethyl-4-phenylindenyl)}{1-(2,3,5-trimethylcyclopentadienyl)}zirconium dichloride, dimethylsilylene-{1-(2-ethyl-4-phenyl-4,5,6,7,8-pentahydroazulenyl)}{1-(2,3,5-trimethylcyclopentadienyl)}zirconium dichloride, dimethylsilylenebis{1-(2-methyl -4,4-dimethylsila-4,5,6,7-tetrahydroindenyl)}zirconium dichloride, dimethylsilylenebis{1-(2-ethyl-4-phenylindenyl)}zirconiumbis(trifluoromethanesulfonic acid), dimethylsilylenebis{1-(2-ethyl-4-phenylazulenyl)}zirconiumbis(trifluoromethanesulfonic acid), dimethylsilylenebis{1-(2-ethyl-4-phenyl-4,5,6,7,8-pentahydroazulenyl)}zirconiumbis(trifluoromethanesulfonic acid), dimethylsilylenebis{1-(2-ethyl-4-(pentafluorophenyl)indenyl}zirconium dichloride, dimethylsilylenebis{1-(2-ethyl-4-phenyl-7-fluoroindenyl)}zirconium dichloride, dimethylsilylenebis{1-(2-ethyl-4-indolylindenyl)}zirconium dichloride, and dimethylsilylenebis{1-(2-dimethylborano-4-indolylindenyl)}zirconium dichloride.
(a-2) Transition metal compounds having two alkylene-bridged 5-membered cyclic ligands, such as ethylene-1,2-bis(indenyl)zirconium dichloride, ethylene-1,2-bis{1-(4,5,6,7-tetrahydroindenyl)}zirconium dichloride, ethylene-1,2-bis{1-(2,4-dimethylindenyl)}zirconium dichloride, ethylene-1,2-bis{1-(2-methyl-4-phenylindenyl)}zirconium dichloride, ethylene-1,2-bis{1-(2-methyl-4,5-benzoindenyl)}zirconium dichloride, and ethylene-1,2-bis[1-{2-methyl-4-(1-naphthyl)indenyl}]zirconium dichloride.
(a-3) Transition metal compounds having two 5-membered cyclic ligands bridged by a hydrocarbon group containing germanium, aluminum, boron, phosphorus or nitrogen, such as dimethylgermylenebis(1-indenyl)zirconium dichloride, dimethylgermylenebis{1-(2-methyl-4-phenylindenyl)}zirconium dichloride, dimethylgermylenebis{1-(2-methyl-4,5-benzoindenyl)}zirconium dichloride, methylaluminumbis(1-indenyl)zirconium dichloride, phenylphosphinobis(1-indenyl)zirconium dichloride, ethylboranobis(1-indenyl)zirconium dichloride, and phenylaminobis(1-indenyl)zirconium dichloride. Catalyst component (b):
   Catalyst component (b) is at least one compound selected from the group consisting of (b-1) an aluminumoxy compound, (b-2) a Lewis acid or an ionic compound capable of reacting with catalyst component (a) to convert the catalyst component (a) to a cation, and (b-3) clay, a clay mineral or an ion exchanging layer compound. some of Lewis acids are regarded as an ionic compound capable of reacting with catalyst component (a) to convert the catalyst component (a) to a cation.

The aluminumoxy compound as catalyst component (b-1) includes compounds represented by formulae (II), (III), and (IV):

R³ ₂-Al-(O-AlR³)_{P}-OAlR³ ₂ (II)

-(O-AlR³)ₚ₊₂- (III)

R³ ₂-Al-(O-BR⁴)ₚ-OAlR³ ₂ (IV)

wherein p represents an integer of 0 to 40, preferably 2 to 30; and R³ represents a hydrogen atom or a hydrocarbon group, preferably having 1 to 10, particularly 1 to 6, carbon atoms.

The compounds represented by formulae (II) and (III), which are also called alumoxanes, are obtained by the reaction between a kind of a trialkylaluminum or a mixture of two or more kinds of trialkylaluminums and water. They include (i) those obtained from a kind of a trialkylaluminum and water, such as methylalumoxane, ethylalumoxane, propylalumoxane, butylalumoxane, and isobutylalumoxane; and (ii) those obtained from two kinds of trialkylaluminums and water, such as methylethylalumoxane, methylbutylalumoxane, and methylisobutylalumoxane. Preferred of them are methylalumoxane and methylisobutylalumoxane. Two or more alumoxane compounds selected from the group (i) and/or the group (ii) can be used in combination. The alumoxane compound may be used in combination with other alkylaluminum compounds, such as trimethylaluminum, triethylaluminum, triisobutylaluminum, and dimethylaluminum chloride.

The reaction for preparing alumoxane compounds can be carried out in various modes. For example, the alumoxane compound can be obtained by (i) allowing a trialkylaluminum to react directly with water in an appropriate organic solvent, such as toluene, benzene or diethyl ether, (ii) allowing a trial kylaluminum to react with a salt hydrate containing water of crystallization, such as copper sulfate hydrate or aluminum sulfate hydrate, (iii) allowing a trialkylaluminum to react with the water content of a hydrated compound like catalyst component (b), such as silica gel, (iv) allowing a mixture of trimethylaluminum and triisobutylaluminum to react directly with water in an appropriate solvent, such as toluene, benzene or diethyl ether, (v) allowing a mixture of trimethylaluminum and triisobutylaluminum to react with a salt hydrate having water of crystallization, such as copper sulfate hydrate or aluminum sulfate hydrate, under heating, (vi) treating hydrated silicagel, etc. successively with triisobutylaluminum and trimethylaluminum, (vii) separately synthesizing methylalumoxane and isobutylalumoxane by known processes, mixing them in a prescribed ratio, and allowing the mixture to react under heating, or (viii) putting a salt having water of crystallization, such as copper sulfate pentahydrate, to an aromatic hydrocarbon solvent, such as benzene or toluene, and allowing the salt to react with trimethylaluminum at a temperature of about -40° to 40°C. In the method (viii), water is usually used in an amount of 0.5 to 1.5 mol per mole of trimethylaluminum. Methylalumoxane as obtained by the method (viii) is a linear or cyclic polymer of organoaluminum.

The aluminumoxy compound represented by formula (IV) is obtained by the reaction between a kind of a trialkylaluminum or two or more kinds of trialkylaluminums and an alkylboronic acid represented by formula: R⁴B(OH)₂, wherein R⁴ represents an alkyl group having 1 to 10 carbon atoms, preferably 1 to 6 carbon atoms at a molar ratio of 10:1 to 1:1. The compound of formula (IV) includes (i) a 2:1 reaction product of trimethylaluminum and methylboronic acid, (ii) a 2:1 reaction product of triisobutylaluminum and methylboronic acid, (iii) a 1:1:1 reaction product of trimethylaluminum, triisobutylaluminum, and methylboronic acid, (iv) a 2:1 reaction product of trimethylaluminum and ethylboronic acid, and (v) a 2:1 reaction product of triethylaluminum and butylboronic acid. These compounds can be used either individually or as a combination of two or more thereof. They can also be used in combination with other alkylaluminum compounds, such as trimethylaluminum, triethylaluminum, triisobutylaluminum, and dimethylaluminum chloride.

The ionic compound (b-2) which is capable of reacting with catalyst component (a) to convert the catalyst component (a) to a cation includes compounds represented by formula (v):

[K]^{e+}[Z]^{e-} (V)

wherein K represents an cationic component; and Z represents an anionic component.
The cation [K]^{e+} includes carbonium cations, a tropylium cation (i.e., cycloheptatrienium cation), ammonium cations, oxonium cations, sulfonium cations, and phosphonium cations. Cations of metals susceptible to reduction and cations of organometals are also included. specific examples of these cations are a triphenylcarbonium cation, a diphenylcarbonium cation, a cycloheptatrienium cation, an indenium cation, a triethylammonium cation, a tripropylammonium cation, a tributylammonium cation, an N,N-dimethylanilinium cation, a dipropylammonium cation, a dicyclohexylammonium cation, a triphenylphosphonium cation, a trimethylphosphonium cation, a tri(methylphenyl)phosphonium cation, a triphenylsulfonium cation, a triphenyloxonium cation, a triethyloxonium cation, a pyridinium cation, a silver ion, a gold ion, a platinum ion, a copper ion, a palladium ion, a mercury ion, and a ferrocenium ion.

The anion [Z]^{e-} becomes a counter ion (usually non-coordinating) against the cation species which the catalyst component (a) has been converted to. The anionic component z includes organoboron compounds, organoaluminum compounds, organogallium compounds, organophosphorus compounds, organoarsenic compounds, and organoantimony compounds. Specific examples of the anionic component are tetraphenylboron, tetrakis(3,4,5-trifluorophenyl)boron, tetrakis(3,5-di(trifluoromethyl)phenyl)boron, tetrakis(3,5-di(t-butyl)phenyl)boron, tetrakis(pentafluorophenyl)boron; tetraphenylaluminum, tetrakis(3,4,5-trifluorophenyl)aluminum, tetrakis(3,5-di(trifluoromethyl)phenyl)aluminum, tetrakis(3,5-di(t-butyl)phenyl)aluminum, tetrakis(pentafluorophenyl)aluminum; tetraphenylgallium, tetrakis(3,4,5-trifluorophenyl)gallium, tetrakis(3,5-di(trifluoromethyl)phenyl)gallium, tetrakis(3,5-di(t-butyl)phenyl)gallium, tetrakis(pentafluorophenyl)gallium; tetraphenylphosphorus, tetrakis(pentafluorophenyl)phosphorus; tetraphenylarsenic, tetrakis(pentafluorophenyl)arsenic; tetraphenylantimony, tetrakis(pentafluorophenyl)antimony; decaborate, undecaborate, carbadecaborate, and decachlorodecaborate.

The Lewis acid as catalyst component (b-2), particularly one capable of converting catalyst component (a) to a cation, includes various organoboron compounds, such as triphenylboron, tris(3,5-difluorophenyl)boron, tris(3,5-di(trimethylsilyl)phenyl)boron, and tris(pentafluorophenyl)boron.

The ionic compounds and Lewis acids can be used either individually or in combination with the aluminumoxy compound represented by formula (II), (III) or (IV) and/or other alkytaluminum compounds, such as trimethyl aluminum, triethylaluminum, triisobutylaluminum, and dimethylaluminum chloride.

Catalyst component (b-3) is clay, a clay mineral or an ion exchanging layer compound. The clay is usually composed mainly of clay minerals. The ion exchanging layer compound is a compound having a layer structure (in which atoms are bonded to form a plurality of planes which are stacked in parallel with a weak bonding force through an ionic bond, etc.) and containing exchangeable ions. Most of clay minerals are ion exchanging layer compounds. The ion exchange layer compounds include ion crystal compounds having a layer crystal structure, such as a hexagonal closest-packed structure, an antimony structure, a cadmium chloride structure, and a cadmium iodide structure. The clay, clay minerals and ion exchanging layer compounds may be either naturally occurring or artificial.

specific examples of the clay or clay minerals are kaoline, bentonite, kibushi clay, gairome clay, allophane, hisingerite, pyrophyllite, talc, mica group minerals, montomorillonite group minerals, vermiculite, chlorite group minerals, palygorskite, kaolinite, nacrite, dickite, and halloysite.

Specific examples of the ion exchanging layer compounds are crystalline acid salts of polyvalent metals, such as α-Zr(HAsO₄)₂·H₂O, α-Zr(HPO₄)₂, α-Zr(KPO₄)₂·3H₂O, α-Ti (HPO₄)₂, α-Ti(HAsO₄)₂·H₂O, α-Sn(HPO₄)₂·H₂O, γ-Zr(HPO₄)₂, γ-Ti(HPO₄)₂, and γ-Ti(NH₄PO₄)₂·H₂O.

The catalyst component (b-3) is preferably subjected to a chemical treatment for removing impurities attached to the surface or for affecting the crystal structure of the clay, such as an acid treatment, an alkali treatment, a salt treatment, or an organic treatment. The acid treatment is effective in not only removing surface impurities but dissolving cations of the crystal structure, e.g., Al, Fe, and Mg ions, to increase the surface area. The alkali treatment destroys the crystal structure of clay to change the structure of the clay. The salt treatment and the organic treatment are to form an ion complex, a molecule complex, an organic derivative, and the like to change the surface area or the interlaminar distance.

Taking advantage of the ion exchanging properties, the catalyst component (b-3) can have the interlaminar exchangeable ions displaced with more bulky ions so as to have an increased interlaminar distance. The bulky ions serve to bear the layer structure and are called pillars. Intercalation compounds having foreign matter (intercalant) introduced (intercalated) among layers are also useful as catalyst component (b-3). Guest compounds (intercalants) include cationic inorganic compounds, such as TiCl₄ and ZrCl₄; metal alcoholates, such as Ti(OR)₄, Zr(OR)₄, PO(OR)₃, B(OR)₃ (R: alkyl, aryl, etc.); and metal hydroxide ions, such as [Al₁₃O₄(OH)₂₄]⁷⁺, [Zr₄(OH)₁₄]²⁺, and [Fe₃O(OCOCH₃)₆]⁺. These guest compounds can be used either individually or as a combination of two or more thereof. Intercalation can be effected in the presence or absence of a polymer obtained by hydrolysis of a metal alcoholate (e.g., Si(OR)₄, Al(OR)₃ or Ge(OR)₄), a colloidal inorganic compound (e.g., SiO₂), etc. The pillar includes an oxide formed by intercalating the above-described hydroxide ions followed by heating to dehydrate.

The solid substances enumerated above as catalyst component (b-3) can be used either individually or as a mixture of two or more thereof. The clay or clay minerals are preferred as catalyst component (b-3). Montomorillonite is the most preferred.

### Catalyst component (c):

The organoaluminum compound as catalyst component (c) is represented by formula: (AlR⁴ₙX₃₋ₙ)ₘ, wherein R⁴ represents an alkyl group having 1 to 20 carbon atoms; X represents a halogen atom, a hydrogen atom, an alkoxy group or an amino group; n represents an integer of 1 to 3; and m represents 1 or 2.

Specific examples of the organoaluminum compound are trimethylaluminum, triethylaluminum, tri(n-propyl)aluminum, tri(n-butyl)aluminum, triisobutylaluminum, tri(n-hexyl)aluminum, tri(n-octyl)aluminum, tri(n-decyl)aluminum, diethylaluminum chloride, diethylaluminum sesquichloride, diethylaluminum hydride, diethylaluminum ethoxide, diethylaluminum dimethylamide, diisobutylaluminum hydride, and diisobutylaluminum chloride. These organoaluminum compounds can be used either individually or as a combination of two or more thereof. Preferred of them are trialkylaluminums (m=1, n=3) and alkylaluminum hydrides. Still preferred are trialkylaluminums having 1 to 8 carbon atoms in the alkyl moiety R⁴.

The catalyst system comprising catalyst components (a) and (b) and, if desired, catalyst component (c), which is used in the production of the preferred propylene random copolymer, is prepared by bringing these catalyst components into contact either inside or outside a polymerization vessel in the presence or absence of monomers.

where catalyst component (b-1) or (b-2) is used as catalyst component (b), the catalyst component can be supported on a finely particulate solid to provide a solid catalyst. The finely particulate solid useful as a support includes inorganic porous oxides, such as silica and alumina; and organic homo- or copolymers mainly comprising α-olefins (e.g., ethylene, propylene or 1-butene) or styrene.

The catalyst system may be such that has been subjected to preliminary polymerization of an olefin. Suitable olefins to be preliminarily polymerized include propylene, ethylene, 1-butene, 3-methylbutene-1, styrene, and divinylbenzene, or mixtures thereof with other olefins.

while the proportions of the catalyst components to be used are arbitrary, preferred ranges generally depend on the kind of the selected catalyst component (b). In using component (b-1) as catalyst component (b), the atomic ratio of the aluminum atoms in component (b-1) to the transition metals (Me) in component (a), i.e., Al/Me ranges from 1 to 100,000, preferably from 10 to 10,000, still preferably from 50 to 5,000. In using components (b-1) and (b-2), the molar ratio of the transition metals in component (a) to components (b-1) and (b-2) ranges from 0.1 to 1,000, preferably from 0.5 to 100, still preferably 1 to 50. where component (c) is used, the molar ratio of component (c) to component (a) is preferably 10⁵ or less, still preferably 10⁴ or less, particularly preferably 10³ or less.

where clay or a clay mineral of component (b-3) is used as catalyst component (b), the molar ratio of the transition metals in component (a), the hydroxyl groups in the clay or clay mineral, and the aluminum atoms in component (c) is preferably 1:0.1 to 100,000:0.1 to 10,000,000, still preferably 1:0.5 to 10,000:0.5 to 1,000,000. where component (b-3) other than clay or clay minerals is used as catalyst component (b), the weight ratio of the transition metals in component (a), the aluminum atoms in component (c), and the component (b-3) is preferably 0.00001 to 1:0.001 to 100:1.

of the above-mentioned catalyst components (b-1), (b-2) and (b-3), preferred is the component (b-3), i.e., clay, a clay mineral or an ion exchanging layer compound. Propylene random copolymers obtained by using a catalyst system comprising component (b-3) as catalyst component (b) have a narrow composition distribution and yet a broader molecular weight distribution (ratio of weight average molecular weight (Mw) to number average molecular weight (Mn), measured by gel-permeation chromatography (GPC)) than those obtained by using other catalyst components (b) and accordingly exhibit satisfactory film molding properties.

Random copolymerization in the presence of the above-described catalyst system can be performed by bringing propylene into contact by mixing with ethylene or an α-olefin having 4 to 20 carbon atoms. During the copolymerization the ratio of the monomers in the reaction system does not need to be constant. Each monomer may be supplied at a given mixing ratio, or the mixing ratio of the monomers may be varied with time. Taking the copolymerization ratio into consideration, any one of the monomers can be fed in divided portions.

The mode of polymerization is not limited as long as each monomer can be brought into contact with the catalyst components efficiently. suitable modes include slurry polymerization using an inert solvent, slurry polymerization using substantially no solvent (propylene serves as a solvent), solution polymerization, and vapor phase polymerization using substantially no liquid solvent in which each monomer is substantially kept in a gaseous phase. Polymerization can be conducted either continuously or batchwise. Preliminary polymerization can be adopted. Solvents useful in slurry polymerization include saturated aliphatic hydrocarbons and aromatic hydrocarbons, such as hexane, heptane, pentane, cyclohexane, benzene, and toluene, and mixtures thereof. The polymerization temperature ranges from 0° to 150°C. Hydrogen can be used as an auxiliary molecular weight modifier. The polymerization pressure is usually from 0 to 90 kg/cm²G, preferably 0 to 60 kg/cm²G, still preferably 1 to 50 kg/cm²G.

The polyolefin resin composition which is used as a surface layer of the biaxially stretched composite film of the invention is preferably prepared by dry blending components (A), (B), and (C) in a ribbon blender, a Henschel mixer, a twin-cylinder mixer, etc. and then melt kneaded in a kneading machine, such as an extruder. Enhanced effects can result where a masterbatch containing components (B) and (C) in larger proportions to component (A) than specified, and the masterbatch is diluted to the specified proportions on use. It should be noted, however, that the effects of the invention are reduced where components (B) and (C) are separately compounded and diluted on molding.

The thickness of the biaxially stretched composite film, while subject to variation according to the end-use, is usually in the range of from 5 to 100 µm, preferably from 10 to 60 µm. The thickness ratio of one surface layer to the base layer is usually 1 to 20%, preferably 1.5 to 10%. One surface layer when the homopolypropylene is used as the surface layer is usually 0.2 to 10 µm thick, preferably 0.3 to 5 µm thick. One surface layer when the propylene random copolymer is used as the surface layer is usually 0.2 to 5 µm thick, preferably 0.3 to 3 µm thick. A thicker surface layer tends to impair the transparency. A thinner surface layer tends to fail to impart uniform heat seal strength. VI-3. Preparation of biaxially stretched composite film

The biaxially stretched composite film of the invention is obtained by laminating a surface layer made of a polyolefin resin composition comprising components (A), (B), and (C) on at least one side of a base layer solely or mainly comprising a crystalline propylene polymer and stretching the laminated film. In order to form a uniform and thin surface layer easily, laminating is preferably carried out by melt-coextruding the polyolefin resin composition on one or both sides of the crystalline propylene polymer (a base layer) and stretching the extruded sheet biaxially. The biaxially stretched composite film can also be obtained by extrusion coating an unstretched or uniaxially stretched sheet as a base layer with the polyolefin resin composition and stretching the laminated sheet biaxially or uniaxially in the direction perpendicular to the stretch direction of the base layer.

Longitudinal stretching can be carried out at 90 to 150°C, preferably 110 to 140°C (when the homopolypropylene is used as the surface layer) or at 90 to 140°C, preferably 105 to 135°C (when the propylene random copolymer is used as the surface layer), to a stretch ratio of 3 to 8, preferably 4 to 6, by making use of a difference in peripheral speed of two pairs of nip rolls. The longitudinally stretched film is then stretched laterally in an oven tenter to a stretch ratio of 3 to 12, preferably 6 to 11. For preventing heat shrinkage on heat sealing, the biaxially stretched film is preferably subjected to heat setting at 140 to 170°C (when the homopolypropylene is used as the surface layer) or at 120 to 170°C (when the propylene random copolymer is used as the surface layer).

The biaxially stretched composite film can further be subjected to a surface treatment such as a corona discharge treatment for the purpose of improving printability and preventing bleeding of the antistatic agent incorporated.

The biaxially stretched composite film according to the present invention exhibits transparency, low-temperature sealability, a satisfactory rise in heat sealing, and scratch resistance. Therefore it has suitability to high speed automatic packaging and hardly contaminates a packaging machine. It is widely applicable as an overlap packaging film for packaging foods, cigarettes, tape cassettes, and so forth.

The present invention will now be illustrated in greater detail with reference to Examples, but it should be understood that the invention is not construed as being limited thereto. unless otherwise noted, all the parts, percents, and ratios are by weight. Physical properties of the resins, resin compositions, and films prepared were measured as follows.

### 1) MFR

Measured in accordance with ASTM-D-1238 (230°C, 2.16 kg load).

### 2) Haze (%)

Haze, as a measure of transparency, was measured in accordance with JIS K7105 (Examples 1 to 8 and comparative Examples 1 to 7) or ASTM-D-1003 (Examples 9 to 14 and Comparative Examples 8 to 10).

### 3) Anti-blocking properties

In Examples 1 to 10 and Comparative Examples 1 to 9, anti-blocking properties were evaluated as follows. Two films were put on top of each other with a contact area of 40 cm² with their corona-treated sides facing each other, sandwiched in between a pair of glass plates, and allowed to stand at 50°C and 50% RH for 24 hours with a load of 2 kg applied thereto. Then, the two films were separated on a tensile tester at a pulling speed of 150 mm/min. The maximum load (g/cm²) required for separation was read as an indication of anti-blocking properties.

In Examples 11 to 14 and Comparative Example 10, anti-blocking properties were measured as follows. Two films were put on top of each other with a contact area of 10 cm², sandwiched in between a pair of glass plates, and allowed to stand at 40°C for 72 hours with a load of 50 g/cm² applied thereto. Then, the two films were separated on a Schopper testing machine. The maximum load (g/10 cm²) required for separation was read.

### 4) Slip properties

A coefficient of static friction (µs) and a coefficient of dynamic friction (µd) were measured in accordance with ASTM D-1894.

### 5) Scratch resistance

A 100 mm wide and 300 mm long film (film A) was tightly fixed on a glass plate without wrinkling. Another film of the same size (film B) was put on film A. A 200 g weight was put on the center of film B with a contact area of 5 x 5 cm. Film B was horizontally slid on film A 100 times at a stroke of 10 cm. The haze of film A was measured before and after the sliding, and the difference, Δhaze (%), was taken as a measure of scratch resistance. The smaller the Δhaze, the higher the scratch resistance.

### 6) Resistance to fall-off

A 100 mm wide and 300 mm long film was fixed tightly on a glass plate with no wrinkles. A 50 mm wide and 100 mm long sheet of black paper was wound around a bar and fastened, the bar having had gauze wound therearound trebly and having a contact area of 10 mm x 100 mm. The black paper-wound bar was slid on the film at a stroke of 200 mm at a speed of 72 double strokes per minute for 10 minutes. The adhesion of the anti-blocking agent onto the black paper was observed with the naked eye and rated according to the following standards.
Standards in Examples 1 to 10 and Comparative Examples 1 to 9:
   - Pass: Substantially no adhesion was observed.
   - Fail: Adhesion was observed.
Standards in Examples 11 to 14 and Comparative Example 10:
   - A: NO adhesion was observed.
   - B: substantially no adhesion was observed.
   - C: Adhesion was observed.

### 7) Packaging suitability

Packs of cigarettes were packaged in a film by means of an automatic packaging machine manufactured by Tokyo Automatic Machinery works, Ltd. at a speed of 400 packs/min. The following observation was made.

### 7-1) Heat sealability

The adhesion of the sealed part of the film at the bottom of the pack was observed.

### 7-2) Non-contaminating properties

A film was run on the packaging machine to a length of 2,000 m. The degree of adhesion of powder onto the packaging machine was observed with the naked eye and rated as follows.
- A: No powder was found adhered.
- B: Slight adhesion of powder was observed.
- C: Considerable adhesion of powder was observed.

### 7-3) Scratch resistance (in automatic packaging)

The film-packaged packs of cigarettes were observed, and the degree of scratches on the packaging film was observed with the naked eye and rated as follows.
- A: No scratches was observed.
- B: Scratches were observed.
- C: Many scratches were observed.

### 8) Melt peak temperature T_{P} and melt end temperature T_{E} in DSC

DSC was carried out with a DSC manufactured by Seiko. A sample weighing 5.0 mg was maintained at 200°C for 5 minutes, crystallized by cooling to 40°C at a rate of temperature drop of 10°C/min, and then melted by heating at a rate of temperature rise of 10°C/min, and the melt peak temperature and the melt end temperature were measured. The linear part of the rear half of the melt peak was extrapolated, and the point of intersection with the base line was taken as a melt end temperature.

### 9) o-Dichlorobenzene extractability at 40°C

A sample polymer was analyzed by cross fractionation under the following conditions to determine extractability at 40°C.
Apparatus: Model CFCT150A, manufactured by Mitubishi Chemical Co., Ltd.
Column: AD80M/S (manufactured by Showa Denko, K.K.) x 3
Concentration: 40 mg/10 ml
Solvent: o-Dichlorobenzene

### 10) Molecular weight distribution

weight average molecular weight (Mw) and number average molecular weight (Mn) were measured by GPC under the following conditions, and a ratio of Mw to Mn was obtained.
Apparatus: GPC 150C Model, manufactured by waters
Column: AD80M/S x 3
Measuring temperature: 140°C
Solvent: o-Dichlorobenzene

### 11) Heat sealability:

### 11-1) Heat seal initiating temperature:

A film was heat sealed with a heat sealing bar having a contact area of 5 mm x 200 mm at a varied sealing temperature under a sealing pressure of 1 kg/cm² for 0.5 second. A 20 mm wide strip was cut out of the sealed sample, and the seal strength was measured with a Schopper testing machine at a pulling speed of 500 mm/min. The sealing temperature which gave a seal strength of 100 g was taken as a heat seal initiating temperature.

### 11-2) Rise in heat sealing:

A film was heat sealed in the same manner as in (11-1). A difference between the sealing temperature giving a seal strength of 400 g and the heat seal initiating temperature was taken as a measure of a rise in heat sealing. The smaller the temperature difference, the more rapid the rise of seal strength, i.e., the more satisfactory the rise in heat sealing.

### EXAMPLE 1

### 1) Crosslinked polymer particles A

Methacrylic acid, methyl methacrylate, and trimethylolpropane trimethacrylate were emulsion polymerized at a ratio of 10 : 80:10 to obtain crosslinked polymer particles A having a volume average particle size of 1.8 µm.

### 2) Preparation of biaxially stretched film

A hundred parts of a resin composition consisting of 85% of polypropylene powder having an MFR of 2.3 g/10 min, 10% of crosslinked polymer particles A, and 5% of an acid-modified polyolefin resin (Umex 1001, produced by Sanyo chemical Industries, Ltd.; acid value: 26 mg-KOH/g) were mixed with 0.1 part of calcium stearate, 0.2 part of 2,6-di-t-butylhydroxytoluene (hereafter abbreviated as BHT), and 0.05 part of Irganox 1010 (produced by Ciba-Geigy, Ltd.) in a Henschel mixer. The blend was melt-kneaded in a 45 mm twin-screw extruder and pelletized.

A hundred parts of polypropylene powder having an MFR of 2.3 g/10 mm, 0.1 part of calcium stearate, 0.2 part of BHT, 0.05 part of Irganox 1010, and 1.1 part of a polyoxyethylene alkylamine fatty acid ester (antistatic agent) were mixed in a Henschel mixer, and the blend was melt-kneaded in a 65 mm extruder and pelletized.

The two kinds of the pellets thus prepared were blended in a ribbon blender in such a ratio that the resulting blend might contain 0.2 part of the crosslinked polymer particles A per 100 parts by weight of the polypropylene. The blended pellets were melt extruded from a T-die and quenched by a chill roll to obtain a film. The resulting film was stretched 5-fold in the longitudinal direction at 140°C and then 9-fold in the lateral direction at 155°C by means of a tenter type biaxial stretching machine to obtain a 20 µm thick biaxially stretched film. A side of the stretched film was subjected to a corona discharge treatment. The results of evaluation of the biaxially stretched film are shown in Table 1 below.

### EXAMPLE 2

A biaxially stretched film was prepared in the same manner as in Example 1, except for replacing crosslinked polymer particles A with crosslinked polymer particles B prepared by emulsion polymerization of methacrylic acid, methyl methacrylate and trimethylolpropane trimethacrylate at a ratio of 15:75:10. The results of evaluation of the stretched film are shown in Table 1.

### EXAMPLE 3

### 1) crosslinked polymer particles F

Methyl methacrylate and trimethylolpropane trimethacrylate were emulsion polymerized at a ratio of 90:10 to obtain an emulsion containing crosslinked polymer particles having a volume average particle size of 1.5 µm. Twenty parts of the emulsion were added to 100 parts of a 10:80:10 mixture of methacrylic acid, methyl methacrylate and trimethylolpropane trimethacrylate to conduct emulsion polymerization. There were obtained double-layered crosslinked polymer particles F having a volume average particle size of 1.8 µm.

### 2) Preparation of biaxially stretched film

A biaxially stretched film was obtained in the same manner as in Example 1-(2), except for using the crosslinked polymer particles F. The results of evaluation of the stretched film are shown in Table 1.

### EXAMPLE 4

A hundred parts of a resin composition comprising 40% of polypropylene powder having an MFR of 2.3 g/10 min, 10% of crosslinked polymer particles A prepared in Example 1-(1), and 50% of Umex 1001 (acid value: 26 mg-KOH/g) as an acid-modified polyolefin resin were mixed with 0.1 part of calcium stearate, 0.2 part of BHT, and 0.05 part of Irganox 1010 in a Henschel mixer. The blend was melt-kneaded in a 45 mm twin-screw extruder and pelletized.

A hundred parts of polypropylene powder having an MFR of 2.3 g/10 min, 0.1 part of calcium stearate, 0.2 part of BHT, 0.05 part of Irganox 1010, and 1.1 part of a polyoxyethylene alkylamine fatty acid ester (antistatic agent) were mixed in a Henschel mixer, and the blend was melt-kneaded in a 65 mm extruder and pelletized.

The two kinds of the pellets thus prepared were blended in a ribbon blender in such a ratio that the blend might contain 0.2 part of the crosslinked polymer particles A per 100 parts by weight of the polypropylene. The blended pellets were melt extruded from a T-die and quenched by a chill roll to obtain a film. The resulting film was stretched 5-fold in the longitudinal direction at 140°C and then 9-fold in the lateral direction at 155°C by means of a tenter type biaxially stretching machine to obtain a 20 µm thick biaxially off as compared with the foregoing Examples.

### COMPARATIVE EXAMPLE 4

A hundred parts of a resin composition comprising 90% of polypropylene powder having an MFR of 2.3 g/10 min and 10% of crosslinked polymer particles A prepared in Example 1-(1) were mixed with 0.1 part of calcium stearate, 0.2 part of BHT, and 0.05 part of Irganox 1010 in a Henschel mixer. The blend was melt-kneaded in a 45 mm twin-screw extruder and pelletized.

A hundred parts of polypropylene powder having an MFR of 2.3 g/10 min, 0.1 part of calcium stearate, 0.2 part of BHT, 0.05 part of Irganox 1010, and 1.1 part of a polyoxyethylene alkylamine fatty acid ester (antistatic agent) were mixed in a Henschel mixer, and the blend was melt-kneaded in a 65 mm extruder and pelletized.

The two kinds of the pellets thus prepared were blended in a ribbon blender in such a ratio that the blend might contain 0.2 part of the crosslinked polymer particles A per 100 parts by weight of the polypropylene. The blended pellets were melt extruded from a T-die and quenched by a chill roll to obtain a film. The resulting film was stretched 5-fold in the longitudinal direction at 140°C and then 9-fold in the lateral direction at 155°C by means of a tenter type biaxially stretching machine to obtain a 20 µm thick biaxially stretched film. A side of the stretched film was subjected to a corona discharge treatment. The results of evaluation of the stretched film are shown in Table 1. It is seen that the film has deteriorated haze and deteriorated resistance to fall-off as compared with the foregoing examples.

### EXAMPLE 5

A biaxially stretched film was obtained in the same manner as in Example 1, except for replacing crosslinked polymer particles A with crosslinked polymer particles G (volume average particle size: 1.8 µm) prepared by emulsion polymerization of acrylic acid, methyl methacrylate, and trimethylolpropane trimethacrylate at a ratio of 10:80:10. The results of evaluation of the stretched film are shown in Table 1.

### COMPARATIVE EXAMPLE 5

A biaxially stretched film was obtained in the same manner as in Example 1, except for replacing crosslinked polymer particles A with non-fusible silicone particles H having an average particle size of 2.0 µm (Tospearl 120, produced by Toshiba silicon Co., Ltd.). The results of evaluation of the film are shown in Table 1. It is seen that the film has deteriorated scratch resistance and deteriorated resistance to fall-off of the polymer particles as compared with the foregoing Examples.

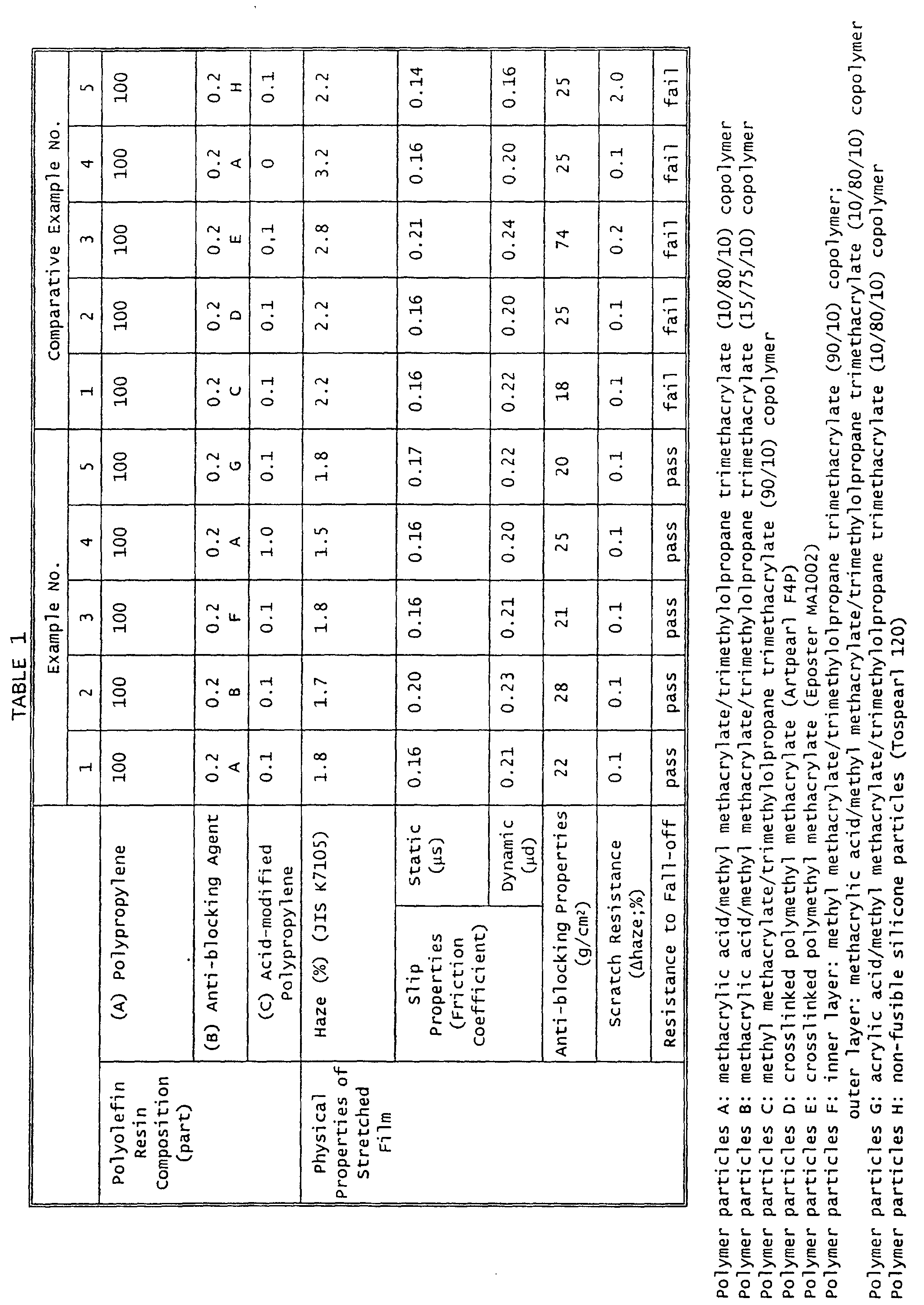

### EXAMPLE 6

A hundred parts of polypropylene powder having an MFR of 2.3 g/10 min, 0.1 part of calcium stearate, 0.2 part of BHT, 0.05 part of Irganox 1010, and 1.1 part of a polyoxyethylene alkylamine fatty acid ester (antistatic agent) were mixed in a Henschel mixer, and the blend was melt-kneaded in a 65 mm extruder and pelletized to prepare polypropylene pellets for a base layer.

A hundred parts of a resin composition consisting of 96.8% of polypropylene powder having an MFR of 2.3 g/10 min, 0.2% of crosslinked polymer particles A prepared in Example 1-(1), and 3.0% of an acid-modified polyolefin resin (Umex 1001; acid value: 26 mg-KOH/g) were mixed with 0.1 part of calcium stearate, 0.2 part of BHT, and 0.05 part of Irganox 1010 in a Henschel mixer. The blend was melt-kneaded in a 65 mm extruder and pelletized to prepare polypropylene pellets for a surface layer.

The polypropylene pellets for a base layer and those for a surface layer were fed from a 75 mm and a 40 mm extruder, respectively, to a three-layer die and coextruded to form a sheet having a three layer structure of surface layer/base layer/surface layer. The extruded sheet was stretched 5-fold in the longitudinal direction at 140°C by making use of a difference in peripheral speed of nip rolls and then 9-fold in the lateral direction at 155°C. A side of the resulting biaxially stretched composite film was subjected to a corona discharge treatment. The results of evaluation of the stretched film are shown in Table 2 below.

### EXAMPLE 7

### 1) Crosslinked polymer particles I

Methacrylic acid, methyl methacrylate, and trimethylolpropane trimethacrylate were emulsion polymerized at a ratio of 15/75/10 to prepare crosslinked polymer particles I having a volume average particle size of 2.2 µm.

### 2) Preparation of biaxially stretched composite film

A hundred parts of a resin composition consisting of 85% of polypropylene powder having an MFR of 2.3 g/10 min, 10% of crosslinked polymer particles I prepared above, and 5% of an acid-modified polyolefin resin (Umex 1001; acid value: 26 mg-KOH/g) were mixed with 0.1 part of calcium stearate, 0.2 part of BHT, and 0.05 part of Irganox 1010 in a Henschel mixer. The blend was melt-kneaded in a 45 mm extruder and pelletized to prepare masterbatch pellets for a surface layer.

A hundred parts of polypropylene powder having an MFR of 2.3 g/10 min, 0.1 part of calcium stearate, 0.2 part of BHT, and 0.05 part of Irganox 1010 were mixed in a Henschel mixer, followed by pelletizing by means of a 65 mm extruder.

The two kinds of pellets were mixed in a ribbon blender to obtain pellets for a surface layer which contained 0.2 part of the crosslinked polymer particles I per 100 parts of the polypropylene.

A biaxially stretched composite film was obtained in the same manner as in Example 6, except for using the above prepared pellets for a surface layer. The results of evaluation are shown in Table 2.

### EXAMPLE 8

A biaxially stretched composite film was obtained in the same manner as in Example 6, except for replacing crosslinked polymer particles A with crosslinked polymer particles F prepared in Example 3. The results of evaluation of the stretched film are shown in Table 2.

### COMPARATIVE EXAMPLE 6

A biaxially stretched composite film was obtained in the same manner as in Example 6, except for replacing crosslinked polymer particles A with polymer particles C used in Comparative Example 1. The results of evaluation of the film are shown in Table 2. It is seen that the comparative film has deteriorated haze and deteriorated resistance to fall-off as compared with Examples 6 to 8.

### COMPARATIVE EXAMPLE 7

A hundred parts of a resin composition consisting of 90% of polypropylene powder having an MFR of 2.3 g/10 min and 10% of crosslinked polymer particles A were mixed with 0.1 part of calcium stearate, 0.2 part of BHT, and 0.05 part of Irganox 1010 in a Henschel mixer. The blend was melt-kneaded in a 45 mm extruder and pelletized to prepare masterbatch pellets for a surface layer.

A hundred parts of polypropylene powder having an MFR of 2.3 g/10 min, 0.1 part of calcium stearate, 0.2 part of BHT, and 0.05 part of Irganox 1010 were mixed in a Henschel mixer. The resulting mixed powder and the masterbatch pellets were blended in a ribbon blender to obtain a resin composition for a surface layer which contained 0.2 part of the crosslinked polymer particles A per 100 parts of the polypropylene.

A biaxially stretched composite film was obtained in the same manner as in Example 6, except for using the above prepared resin composition as a surface layer. The results of evaluation are shown in Table 2.

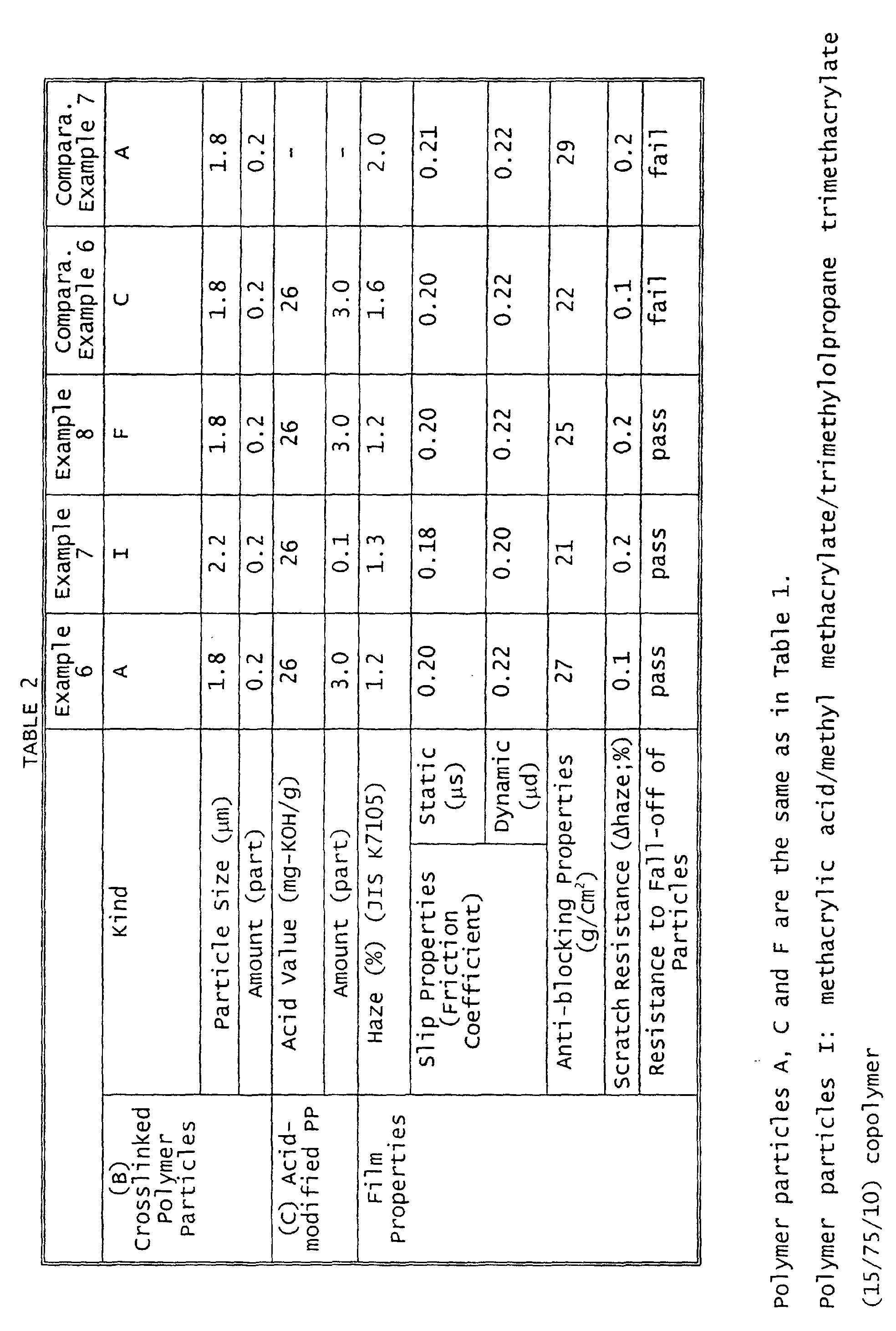

### EXAMPLE 9

A resin composition consisting of 95 parts of crystalline propylene homopolymer powder having an MFR of 2.5 g/10 min and an I.I. of 99%, 5 parts of a hydrogenated terpene resin, and 0.9 part of a polyoxyethylene alkylamine fatty acid ester (antistatic agent) was used as a base layer.

A resin composition consisting of (A) a mixture of 85 parts of a propylene-ethylene-butene-1 random copolymer having an ethylene content of 2%, a butene-1 content of 12%, and an MFR of 5.5 g/10 min and 15 parts of a butene-1-propylene random copolymer, (B) 0.3 part of true spherical crosslinked polymer particles A (volume average particle size: 1.8 µm) obtained by emulsion polymerization of methacrylic acid, methyl methacrylate, and trimethylolpropane trimethacrylate at a ratio of 10:80:10, (C) 4 parts of maleic anhydride-modified polypropylene (umex 1001; acid value: 26 mg-KOH/g) and, in addition, 0.5 part of silicone oil having a viscosity of 10,000 cSt was used as one of surface layers (hereinafter referred to as an α-layer).

A resin composition consisting of 100 parts of the same propylene-ethylene-butene-1 random copolymer as described above, 0.3 part of the same component (B) as described above, and 4 parts of the same component (C) as described above was used as the other surface layer (hereinafter referred to as a β-layer).

The resin compositions for the base layer, the α-layer, and the β-layer were extruded from the respective extruders (diameter: 115 mm, 20 mm, and 30 mm, respectively) through a three-layer die to form a laminated sheet having a structure of α-layer/base layer/β-layer=0.05 mm/1 mm/0.05 mm. The laminated sheet was 5-fold stretched longitudinally at 115°C by making use of a difference in peripheral speed of nip rolls and then stretched laterally in an oven tenter at 168°C to obtain a biaxially stretched composite film having an α-layer/base layer/β-layer thickness of 0.9 µm/20 µm/1.1 µm.
The β-layer side of the stretched film was subjected to a corona discharge treatment. Automatic packaging of packs of cigarettes was carried out using the resulting stretched film with its corona-treated side inward, and suitability to automatic packaging was evaluated. The results obtained are shown in Table 3 below.

### EXAMPLE 10

Eighty-five parts of propylene-ethylene random copolymer powder having an MFR of 5.0 g/10 min were mixed with 10 parts of true spherical crosslinked polymer particles J (volume average particle size: 2.2 µm) obtained by emulsion polymerization of methacrylic acid, methyl methacrylate and trimethylolpropane triacrylate at a ratio of 5:87:8, and 5 parts of umex 1001 (acid value: 26 mg-KOH/g). A hundred parts of the resulting resin composition was mixed with 0.1 part of calcium stearate, 0.2 part of BHT, and 0.05 part of Irganox 1010 in a Henschel mixer and pelletized in a 45 mm extruder to prepare masterbatch pellets.

Two-point-five parts of the masterbatch pellets were mixed into 97.5 parts of (A) a propylene-ethylene random copolymer having an ethylene content of 5% and an MFR of 6.0 g/10 min to prepare a resin composition for an α-layer containing 0.25 part of the crosslinked polymer particles J as component (B) and 0.125 part of Umex 1001 as component (C).

A biaxially stretched composite film was prepared in the same manner as in Example 9, except for using the above prepared resin composition for formation of the α-layer. Automatic packaging of packs of cigarettes was carried out using the resulting stretched film with its corona-treated side inward. The results obtained are shown in Table 3.

### COMPARATIVE EXAMPLE 8

A biaxially stretched composite film was prepared in the same manner as in Example 9, except for replacing crosslinked polymer particles A used as an anti-blocking agent with methyl methacrylate-trimethylolpropane trimethacrylate (75:25) copolymer particles K having a volume average particle size of 3.0 µm. The results of automatic packaging are shown in Table 3.

### COMPARATIVE EXAMPLE 9

A biaxially stretched composite film was prepared in the same manner as in Example 9, except for replacing the crosslinked polymer particles A used as an anti-blocking agent with non-fusible silicone particles H having an average particle size of 2.0 µm (Tospearl 120). The results of automatic packaging using the resulting film are shown in Table 3.

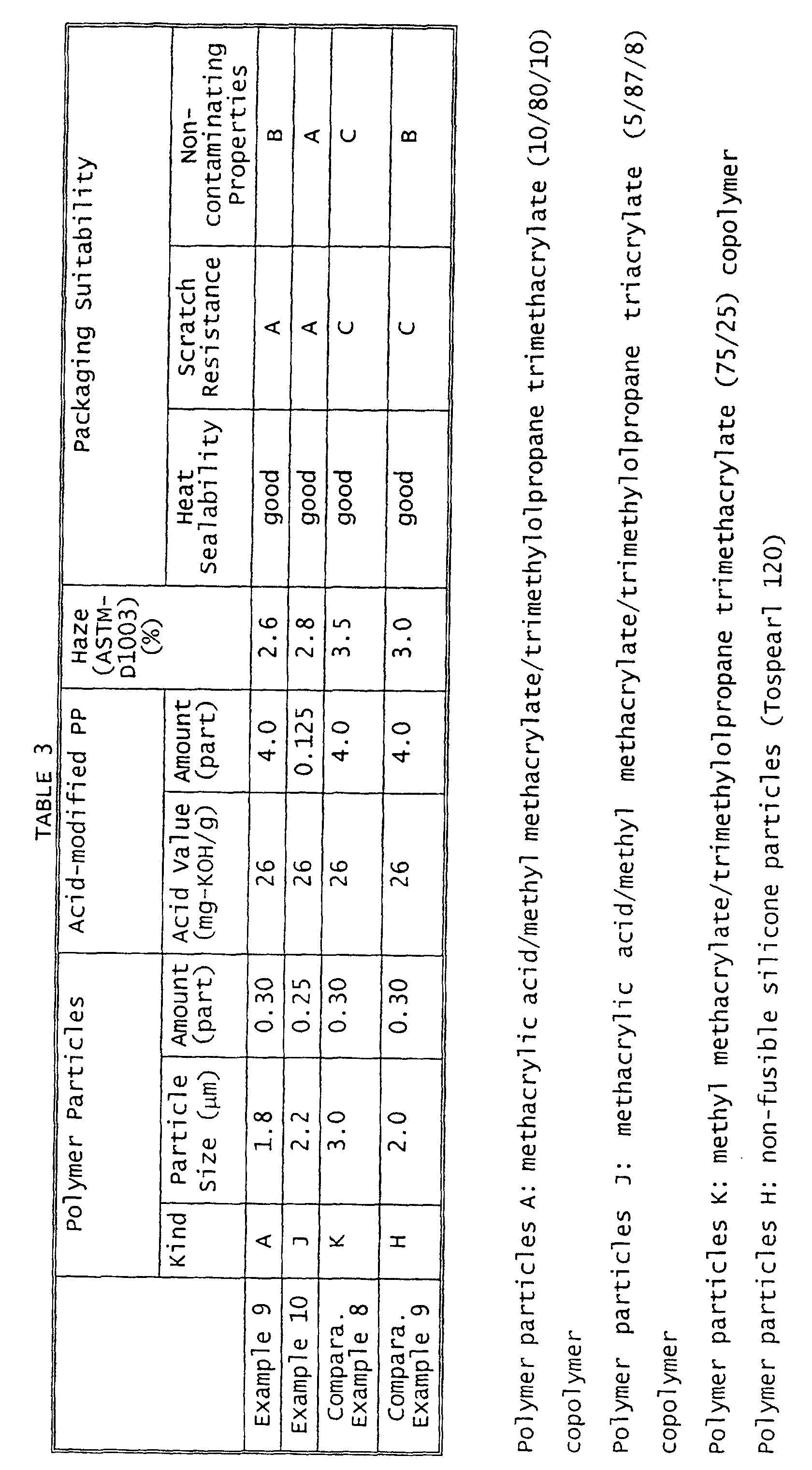

### EXAMPLE 11

### 1) Preparation of propylene-ethylene random copolymer

### 1-1) Catalyst component

(γ)-dimethylsilylenebis(2-methylbenzoindenyl)zirconium dichloride was synthesized in accordance with the method described in *Organometallics*, Vol. 13, p. 964 (1994).

### 1-2) Preparation of catalyst

In a 0.5 l glass-made reactor equipped with stirring blades was put 2.4 g of MAO(Methyl alumoxane)-on-silica (TAO279/HL103, produced by witco) which contained 20.7 mmol of aluminum, and 50 ml of n-heptane was introduced therein. To the mixture was added 20.0 ml (0.0637 mmol) of (γ)-dimethylsilylenebis(2-methylbenzoindenyl)zirconium dichloride previously diluted with toluene, and an n-heptane solution containing 4.14 ml (3.03 mmol) of triisobutylaluminum was then added. The mixture was allowed to react at room temperature for 2 hours. Propylene was made to flow to carry out preliminary polymerization to obtain a solid catalyst (designated solid catalyst A).

### 1-3) Polymerization

After thoroughly purging a 200 l stirring type autoclave with propylene, an n-heptane solution of 3 g of triethylaluminum, 45 kg of liquid propylene, and 1.2 kg of ethylene were introduced therein, and the inner temperature was kept at 30°C. Solid catalyst A was added thereto in an amount of 0.8 g exclusive of the polymer component formed by preliminary polymerization, and the temperature was elevated to 65°C to initiate polymerization. After the reaction system was maintained at that temperature for 3 hours, 100 ml of ethanol was added to stop the polymerization. The residual gas was expelled, and the polymer was dried to obtain 14.1 kg of a propylene-ethylene random copolymer having an MFR of 9.3 g/10 min and an ethylene content of 3.7%.

As a result of analysis, the resulting polymer was found to have a melt peak temperature T_{P} of 118.9°C and a melt end temperature T_{E} of 126.7°C in DSC, giving a difference, T_{E} - T_{P}, of 7.8°C, an o-dichlorobenzene extractability (at 40°C) of 0.7%, and a molecular weight distribution Mw/Mn measured by GPC of 2.30.

### 2) Preparation of biaxially stretched film

A resin composition consisting of 100 parts of a crystalline propylene homopolymer having an MFR of 1.9 g/10 min and an I.I. of 98% and 0.9 part of a polyoxyethylene alkylamine fatty acid ester was used as a base layer.

A hundred parts of the above-prepared propylene-ethylene random copolymer as component (A) were mixed with 0.3 part of crosslinked polymer particles A as used in Example 9 as component (B), and 4 parts of maleic anhydride-modified polypropylene (Umex 1001; acid value: 26 mg-KOH/g) as component (C) to prepare a resin composition for a surface layer.

The resin composition for a base layer and the resin composition for the surface layer were coextruded from the respective extruders (diameter: 115 mm and 30 mm, respectively) through a two-layer die to obtain a laminated sheet having a thickness of 1 mm/0.15 mm. The laminated sheet was 5-fold stretched longitudinally at 115°C by making use of a difference in peripheral speed of nip rolls and then stretched laterally in an oven tenter at 165°C to obtain a biaxially stretched composite film having a thickness of 20 µm/3 µm. The results of evaluation of the resulting film are shown in Table 4.

### EXAMPLE 12

### 1) Preparation of propylene-butene-1 random copolymer

Polymerization was carried out in the same manner as in Example 11, except for changing the amount of solid catalyst A to 1.0 g (exclusive of the polymer component) and replacing ethylene gas with 1.35 kg of liquid 1-butene, to obtain a propylene-butene-1 random copolymer having an MFR of 2.8 g/10 min and a butene content of 3.7%.

The resulting polymer had a T_{P} of 138.4°C and a T_{E} of 143.1°C in DSC, giving a difference, T_{E} - T_{P}, of 4.7°C, an o-dichlorobenzene extractability (at 40°C) of 0.2%, and a molecular weight distribution Mw/Mn of 2.35 in GPC.

### 2) Preparation of biaxially stretched film

Eighty-five parts of the propylene-butene-1 random copolymer prepared above were mixed with 10 parts of crosslinked polymer particles J as used in Example 10, and 5 parts of Umex 1001 (acid value: 26 mg-KOH/g). The resulting resin composition (100 parts) was compounded with 0.1 part of calcium stearate, 0.2 part of BHT, and 0.05 part of Irganox 1010 in a Henschel mixer, pelletized by means of a 45 mm twin-screw extruder to prepare masterbatch pellets.

Three parts of the masterbatch pellets were diluted with 97 parts of the propylene-butene-1 random copolymer to prepare a resin composition containing 0.3 part of the crosslinked polymer particles J as component (B) and 0.15 part of Umex 1001 as component (C).

A biaxially stretched composite film was prepared in the same manner as in Example 11, except for using the resulting resin composition as a surface layer. The results of evaluation are shown in Table 4.

### EXAMPLE 13

### 1) Preparation of Propylene-ethylene-butene-1 random copolymer

Polymerization was performed in the same manner as in Example 11, except for changing the amount of solid catalyst A to 1.2 g (exclusive of the polymer component) and replacing 1.2 kg of ethylene gas with 0.61 kg of ethylene gas and 3.7 kg of liquid 1-butene, to obtain a propylene-ethylene-butene-1 random copolymer having an MFR of 5.6 g/10 min, an ethylene content of 3.0 mol%, and a 1-butene content of 6.2 mol%. The polymer had a T_{P} of 118°C, a T_{E} of 125.2°C, a difference T_{E} - T_{P} of 7.2°C, an o-dichlorobenzene extractabitity (40°C) of 0.7%, and a molecular weight distribution Mw/Mn of 2.43.

### 2) Preparation of biaxially stretched composite film

A biaxially stretched composite film was prepared in the same manner as in Example 12, except for replacing the propylene-butene-1 random copolymer with the propylene-ethylene-butene-1 random copolymer prepared above. The results of evaluation of the film are shown in Table 4.

### EXAMPLE 14

### 1) Preparation of Propylene-ethylene random copolymer

### 1-1) Catalyst component

(γ)-dimethylsilylenebis(2-methyl-4-phenylazulenyl)zirconium dichloride was synthesized in accordance with the method described in JP-A-6-239914.

One kilogram of montmorillonite (Kunibia F, produced by Kunimine Kogyo) was suspended in 6.3 l of desalted water having dissolved therein 1.25 kg of magnesium chloride, and the suspension was stirred at 80°C for 1 hour. The solid collected was washed with water and then suspended in 7 l of a 8% hydrochloric acid aqueous solution, stirred at 90°C for 2 hours, followed by washing with desalted water. The resulting aqueous slurry of montmorillonite thus treated was adjusted to a solid concentration of 15% and spray dried to obtain spherical particles. The particles were dried in vacuo at 200°C for 2 hours.

### 1-2) Preparation of catalyst

In a 0.5 l glass-made reactor equipped with stirring blades were put 0.15 mmol of (γ)-dimethylsilylenebis(2-methyl-4-phenylazulenyl)zirconium dichloride and a toluene solution of 0.3 mmol of triisobutylaluminum. To the mixture was added 1.5 g of the chemically treated montmorillonite particles, followed by stirring at room temperature for 5 minutes to obtain a toluene slurry of a solid catalyst (designated solid catalyst B).

### 1-3) Polymerization

Polymerization was conducted in the same manner as in Example 11, except for replacing solid catalyst A with 1.5 g of solid catalyst B and replacing triethylaluminum with 5 g of triisobutylaluminum, to obtain 16.1 kg of a propylene-ethylene random copolymer having an MFR of 13.4 g/10 min and an ethylene content of 2.7%. As a result of analysis, the resulting polymer was found to have a T_{P} of 129.3°C and a T_{E} of 134.9°C, giving a difference T_{E} - T_{P} of 5.6°C, an o-dichlorobenzene extractability (40°C) of 0%, and a molecular weight distribution Mw/Mn of 3.15.

### 2) Preparation of biaxially stretched composite film

A biaxially stretched composite film was obtained in the same manner as in Example 12, except for replacing the propylene-butene-1 random copolymer with the propylene-ethylene random copolymer prepared above. The results of evaluation are shown in Table 4.

### COMPARATIVE EXAMPLE 10

A biaxially stretched composite film was obtained in the same manner as in Example 11, except for replacing crosslinked polymer particles A used as component B with polymer particles (volume average particle size: 1.3 µm) obtained by emulsion polymerization of methyl methacrylate and trimethylolpropane trimethacrylate at a ratio of 80:20. The results of evaluation of the resulting film are shown in Table 4.

**TABLE 4**

| | Example 11 | Example 12 | Example 13 | Example 14 | Compara. Example 10 |
|---|---|---|---|---|---|
| Haze (%) (ASTM D-1003) | 2.0 | 2.3 | 2.2 | 1.9 | 1.8 |
| Anti-blocking Properties (g/10cm²) | 140 | 60 | 100 | 80 | 250 |
| Heat Seal Initiating Temp. (°C) | 105 | 128 | 103 | 119 | 104 |
| Rise in Heat Sealing (°C) | 6 | 5 | 6 | 7 | 5 |
| Scratch Resistance (Δhaze;%) | 0.5 | 0.6 | 0.6 | 0.5 | 3.2 |
| Resistance to Fall-off of Particles | B | A | A | A | C |

While the invention has been described in detail and with reference to specific examples thereof, it will be apparent to one skilled in the art that various changes and modifications can be made therein without departing from the spirit and scope thereof.

## Claims

1. A polyolefin resin composition comprising:
(A) 100 parts by weight of a polyolefin resin,
(B) 0.05 to 1.0 part by weight of crosslinked polymer particles having a volume-average particle size of 0.3 to 10 µm, said crosslinked polymer (B) comprising (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methy]styrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(C) 0.01 to 5 parts by weight of an acid-modified pol yol efi n resin having an acid value of 1.0 to 100 mg-KOH/g as specified in JIS K0070.

2. A polyolefin resin composition comprising:
(A) 100 parts by weight of a polyolefin resin,
(B) 0.05 to 1.0 part by weight of crosslinked polymer particles having a volume-average particle size of 0.3 to 10 µm, and
(C) 0.01 to 5 parts by weight of an acid-modified polyolefin resin having an acid value of 1.0 to 100 mg-KOH/g as specified in JIS K0070,
wherein said crosslinked polymer particles (B) are particles having a multilayer structure the outermost layer of which is made of a copolymer comprising (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methy]styrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit.

3. A polyolefin resin composition according to claim 1, wherein said polyolefin resin (A) is a polypropylene resin.

4. A stretched polyolefin film obtained by at least uniaxially stretching a film of a polyolefin resin composition comprising:
(A) 100 parts by weight of a polyolefin resin,
(B) 0.05 to 1.0 part by weight of crosslinked polymer particles having a volume-average particle size of 0.3 to 10 µm, said crossliked polymer particles comprising (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methy]styrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(C) 0.01 to 5 parts by weight of an acid-modified polyolefin resin having an acid value of 1.0 to 100 mg-KOH/g as specified in JIS K0070.

5. A stretched polyolefin film according to claim 4, wherein said polyolefin resin (A) is a polypropylene resin.

6. A biaxially stretched composite film comprising a base layer solely or mainly comprising a crystalline propylene polymer having provided on at least one side thereof a layer made of a composition comprising:
(A) 100 parts by weight of a propylene polymer,
(B) 0.05 to 1.0 part by weight of crosslinked polymer particles having a volume-average particle size of 0.3 to 10 µm, said crosslinked polymer particles comprising (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methy]styrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(C) 0.01 to 5 parts by weight of an acid-modified polyolefin resin having an acid value of 1.0 to 100 mg-KOH/g as specified in JIS K0070.

7. A biaxially stretched composite film comprising a base layer solely or mainly comprising a crystalline propylene polymer having provided on at least one side thereof a layer made of a composition comprising:
(A) 100 parts by weight of a propylene random copolymer,
(B) 0.05 to 1.0 part by weight of crosslinked polymer particles having a volume-average particle size of 0.3 to 10 µm, said crosslinked polymer particles comprising (1) 1 to 50% by weight of a radically polymerizable monomer unit containing a carboxyl group in the molecule, (2) 49 to 98% by weight of a radically polymerizable monomer unit selected from the group consisting of methyl acrylate, ethyl acrylate, n-butyl acrylate, isobutyl acrylate, dodecyl acrylate, stearyl acrylate, 2-ethylhexyl acrylate, tetrahydrofurfuryl acrylate, methyl methacrylate, ethyl methacrylate, propyl methacrylate, n-butyl methacrylate, isobutyl methacrylate, n-octyl methacrylate, dodecyl methacrylate, stearyl methacrylate, and 2-ethylhexyl methacrylate; methyl 5-hexenoate; styrene, o-methylstyrene, m-methylstyrene, p-methy]styrene, α-methylstyrene, p-methoxystyrene, p-t-butylstyrene, p-phenylstyrene, o-chlorostyrene, m-chlorostyrene, and p-chlorostyrene; vinyl chloride, vinyl acetate, acrylonitrile, acrylamide, and N-vinylpyrrolidone, and (3) 1 to 20% by weight of a crosslinking monomer unit, and
(C) 0.01 to 5 parts by weight of an acid-modified polyolefin resin having an acid value of 1.0 to 100 mg-KOH/g as specified in JIS K0070.

8. A biaxially stretched composite film according to claim 7, wherein said propylene random copolymer has (1) a melt peak temperature T_{P}, as measured by differential scanning calorimetry (DSC), of from 110°C to 140°C, (2) a melt end temperature T_{E}, as measured by DSC, satisfying the relationship: T_{E}-T_{P}≤8°C, and (3) an o-dichlorobenzene extractability of 2.0% by weight or less at 40°C.

9. A biaxially stretched composite film according to claim 7, wherein said propylene random copolymer is a propylene-ethylene random copolymer or a propylene-ethylene-butene-1 random copolymer.

10. A biaxially stretched composite film according to claim 8, wherein said propylene random copolymer is a propylene-ethylene random copolymer or a propylene-ethylene-butene-1 random copolymer.

## Patentansprüche

1. Polyolefinharzmasse, umfassend:
(A) 100 Gew.-Teile eines Polyolefinharzes,
(B) 0,05 bis 1,0 Gew.-Teile vernetzter Polymerteilchen mit einer volumengemittelten Teilchengröße von 0,3 bis 10 µm, wobei das vernetzte Polymer (B) (1) 1 bis 50 Gew.-% einer radikalisch polymerisierbaren Monomereinheit, die eine Carboxylgruppe im Molekül enthält, (2) 49 bis 98 Gew.-% einer radikalisch polymerisierbaren Monomereinheit, ausgewählt aus Acrylsäuremethylester, Acrylsäureethylester, Acrylsäure-n-butylester, Acrylsäureisobutylester, Acrylsäuredodecylester, Acrylsäurestearylester, Acrylsäure-2-ethylhexylester, Acrylsäuretetrahydrofurfurylester, Methacrylsäuremethylester, Methacrylsäureethylester, Methacrylsäurepropylester, Methacrylsäure-n-butylester, Methacrylsäureisobutylester, Methacrylsäure-noctylester, Methacrylsäuredodecylester, Methacrylsäurestearylester und Methacrylsäure-2-ethylhexylester; 5-Hexensäuremethylester; Styrol, o-Methylstyrol, m-Methylstyrol, p-Methylstyrol, α-Methylstyrol, p-Methoxystyrol, p-tert-Butylstyrol, p-Phenylstyrol, o-Chlorstyrol, m-Chlorstyrol und p-Chlorstyrol; Vinylchlorid, Essigsäurevinylester, Acrylnitril, Acrylamid und N-Vinylpyrrolidon, und (3) 1 bis 20 Gew.-% einer vernetzenden Monomereinheit umfasst, und
(C) 0,01 bis 5 Gew.-Teile eines säuremodifizierten Polyolefinharzes mit einem Säurewert von 1,0 bis 100 mg KOH/g, wie in JIS K0070 festgelegt.

2. Polyolefinharzmasse, umfassend:
(A) 100 Gew.-Teile eines Polyolefinharzes,
(B) 0,05 bis 1,0 Gew.-Teile vernetzter Polymerteilchen mit einer volumengemittelten Teilchengröße von 0,3 bis 10 µm, und
(C) 0,01 bis 5 Gew.-Teile eines säuremodifizierten Polyolefinharzes mit einem Säurewert von 1,0 bis 100 mg KOH/g, wie in JIS K0070 festgelegt,
wobei die vernetzten Polymerteilchen (B) Teilchen mit einer Mehrschichtstruktur sind, von denen die äußerste Schicht aus einem Copolymer hergestellt ist, das (1) 1 bis 50 Gew.-% einer radikalisch polymerisierbaren Monomereinheit, die eine Carboxylgruppe im Molekül enthält, (2) 49 bis 98 Gew.-% einer radikalisch polymerisierbaren Monomereinheit, ausgewählt aus Acrylsäuremethylester, Acrylsäureethylester, Acrylsäure-n-butylester, Acrylsäureisobutylester, Acrylsäuredodecylester, Acrylsäurestearylester, Acrylsäure-2-ethylhexylester, Acrylsäuretetrahydrofürfürylester, Methacrylsäuremethylester, Methacrylsäureethylester, Methacrylsäurepropylester, Methacrylsäure-n-butylester, Methacrylsäureisobutylester, Methacrylsäure-n-octylester, Methacrylsäuredodecylester, Methacrylsäurestearylester und Methacrylsäure-2-ethylhexylester; 5-Hexensäuremethylester; Styrol, o-Methylstyrol, m-Methylstyrol, p-Methylstyrol, α-Methylstyrol, p-Methoxystyrol, p-tert-Butylstyrol, p-Phenylstyrol, o-Chlorstyrol, m-Chlorstyrol und p-Chlorstyrol; Vinylchlorid, Essigsäurevinylester, Acrylnitril, Acrylamid und N-Vinylpyrrolidon, und (3) 1 bis 20 Gew.-% einer vernetzenden Monomereinheit umfasst.

3. Polyolefinharzmasse nach Anspruch 1, in der das Polyolefinharz (A) ein Polypropylenharz ist.

4. Gestreckte Polyolefinfolie, erhalten durch mindestens uniaxiales Strecken einer Folie aus einer Polyolefinharzmasse, die umfasst:
(A) 100 Gew.-Teile eines Polyolefinharzes,
(B) 0,05 bis 1,0 Gew.-Teile vernetzter Polymerteilchen mit einer volumengemittelten Teilchengröße von 0,3 bis 10 µm, wobei die vernetzten Polymerteilchen (1) 1 bis 50 Gew.-% einer radikalisch polymerisierbaren Monomereinheit, die eine Carboxylgruppe im Molekül enthält, (2) 49 bis 98 Gew.-% einer radikalisch polymerisierbaren Monomereinheit, ausgewählt aus Acrylsäuremethylester, Acrylsäureethylester, Acrylsäure-n-butylester, Acrylsäureisobutylester, Acrylsäuredodecylester, Acrylsäurestearylester, Acrylsäure-2-ethylhexylester, Acrylsäuretetrahydrofurfurylester, Methacrylsäuremethylester, Methacrylsäureethylester, Methacrylsäurepropylester, Methacrylsäure-n-butylester, Methacrylsäureisobutylester, Methacrylsäuren-octylester, Methacrylsäuredodecylester, Methacrylsäurestearylester und Methacrylsäure-2-ethylhexylester; 5-Hexensäuremethylester; Styrol, o-Methylstyrol, m-Methylstyrol, p-Methylstyrol, α-Methylstyrol, p-Methoxystyrol, p-tert-Butylstyrol, p-Pheriylstyrol, o-Chlorstyrol, m-Chlorstyrol und p-Chlorstyrol; Vinylchlorid, Essigsäurevinylester, Acrylnitril, Acrylamid und N-Vinylpyrrolidon, und (3) 1 bis 20 Gew.-% einer vernetzenden Monomereinheit umfasst, und
(C) 0,01 bis 5 Gew.-Teile eines säuremodifizierten Polyolefinharzes mit einem Säurewert von 1,0 bis 100 mg KOH/g, wie in JIS K0070 festgelegt.

5. Gestreckte Polyolefinfolie nach Anspruch 4, in der das Polyolefinharz (A) ein Polypropylenharz ist.

6. Biaxial gestreckte Verbundfolie, umfassend eine Grundschicht, die allein oder hauptsächlich ein kristallines Propylenpolymer umfasst, das auf mindestens einer Seite davon mit einer Schicht versehen ist, die aus einer Masse hergestellt ist, die umfasst:
(A) 100 Gew.-Teile eines Propylenpolymers,
(B) 0,05 bis 1,0 Gew.-Teile vernetzter Polymerteilchen mit einer volumengemittelten Teilchengröße von 0,3 bis 10 µm, wobei die vernetzten Polymerteilchen (1) 1 bis 50 Gew.-% einer radikalisch polymerisierbaren Monomereinheit, die eine Carboxylgruppe im Molekül enthält, (2) 49 bis 98 Gew.-% einer radikalisch polymerisierbaren Monomereinheit, ausgewählt aus Acrylsäuremethylester, Acrylsäureethylester, Acrylsäure-n-butylester, Acrylsäureisobutylester, Acrylsäuredodecylester, Acrylsäurestearylester, Acrylsäure-2-ethylhexylester, Acrylsäuretetrahydrofurfurylester, Methacrylsäuremethylester, Methacrylsäureethylester, Methacrylsäurepropylester, Methacrylsäure-n-butylester, Methacrylsäureisobutylester, Methacrylsäuren-octylester, Methacrylsäuredodecylester, Methacrylsäurestearylester und Methacrylsäure-2-ethylhexylester; 5-Hexensäuremethylester; Styrol, o-Methylstyrol, m-Methylstyrol, p-Methylstyrol, α-Methylstyrol, p-Methoxystyrol, p-tert-Butylstyrol, p-Phenylstyrol, o-Chlorstyrol, m-Chlorstyrol und p-Chlorstyrol; Vinylchlorid, Essigsäurevinylester, Acrylnitril, Acrylamid und N-Vinylpyrrolidon, und (3) 1 bis 20 Gew.-% einer vernetzenden Monomereinheit umfasst, und
(C) 0,01 bis 5 Gew.-Teile eines säuremodifizierten Polyolefinharzes mit einem Säurewert von 1,0 bis 100 mg KOH/g, wie in JIS K0070 festgelegt.

7. Biaxial gestreckte Verbundfolie, umfassend eine Grundschicht, die allein oder hauptsächlich ein kristallines Propylenpolymer umfasst, das auf mindestens einer Seite davon mit einer Schicht versehen ist, die aus einer Masse hergestellt ist, die umfasst:
(A) 100 Gew.-Teile eines statistischen Propylencopolymers,
(B) 0,05 bis 1,0 Gew.-Teile vernetzter Polymerteilchen mit einer volumengemittelten Teilchengröße von 0,3 bis 10 µm, wobei die vernetzten Polymerteilchen (1) 1 bis 50 Gew.-% einer radikalisch polymerisierbaren Monomereinheit, die eine Carboxylgruppe im Molekül enthält, (2) 49 bis 98 Gew.-% einer radikalisch polymerisierbaren Monomereinheit, ausgewählt aus Acrylsäuremethylester, Acrylsäureethylester, Acrylsäure-n-butylester, Acrylsäureisobutylester, Acrylsäuredodecylester, Acrylsäurestearylester, Acrylsäure-2-ethylhexylester, Acrylsäuretetrahydrofurfurylester, Methacrylsäuremethylester, Methacrylsäureethylester, Methacrylsäurepropylester, Methacrylsäure-n-butylester, Methacrylsäureisobutylester, Methacrylsäuren-octylester, Methacrylsäuredodecylester, Methacrylsäurestearylester und Methacrylsäure-2-ethylhexylester; 5-Hexensäuremethylester; Styrol, o-Methylstyrol, m-Methylstyrol, p-Methylstyrol, α-Methylstyrol, p-Methoxystyrol, p-tert-Butylstyrol, p-Pheriylstyrol, o-Chlorstyrol, m-Chlorstyrol und p-Chlorstyrol; Vinylchlorid, Essigsäurevinylester, Acrylnitril, Acrylamid und N-Vinylpyrrolidon, und (3) 1 bis 20 Gew.-% einer vernetzenden Monomereinheit umfasst, und
(C) 0,01 bis 5 Gew.-Teile eines säuremodifizierten Polyolefinharzes mit einem Säurewert von 1,0 bis 100 mg KOH/g, wie in JIS K0070 festgelegt.

8. Biaxial gestreckte Verbundfolie nach Anspruch 7, in der das statistische Propylencopolymer (1) eine Schmelzpeaktemperatur T_{P}, gemessen mit Differentialscanningkalorimetrie (DSC), von 110°C bis 140°C, (2) eine Schmelzendtemperatur T_{E}, gemessen mit DSC, die die Beziehung: T_{E} - T_{P} ≤ 8°C erfüllt, und (3) einen in o-Dichlorbenzol extrahierbaren Teil von 2,0 Gew.-% oder weniger bei 40°C aufweist.

9. Biaxial gestreckte Verbundfolie nach Anspruch 7, in der das statistische Propylencopolymer ein statistisches Propylen-Ethylen-Copolymer oder ein statistisches Propylen-Ethylen-Buten-1-Copolymer ist.

10. Biaxial gestreckte Verbundfolie nach Anspruch 8, in der das statistische Propylencopolymer ein statistisches Propylen-Ethylen-Copolymer oder ein statistisches Propylen-Ethylen-Buten-1-Copolymer ist.

## Revendications

1. Composition de résine polyoléfinique comprenant:
(A) 100 parties en masse d'une résine polyoléfinique,
(B) 0,05 à 1,0 partie en masse de particules d'un polymère réticulé présentant une taille particulaire moyenne en volume comprise entre 0,3 et 10 µm, ledit polymère réticulé (B) comprenant (1) de 1 à 50% en masse d'un motif monomère polymérisable par voie radicalaire contenant un groupe carboxyle dans la molécule, (2) de 49 à 98% en masse d'un motif monomère polymérisable par voie radicalaire choisi dans le groupe constitué par l'acrylate de méthyle, l'acrylate d'éthyle, l'acrylate de n-butyle, l'acrylate d'isobutyle, l'acrylate de dodécyle, l'acrylate de stéaryle, l'acrylate de 2-éthylhexyle, l'acrylate de tétrahydrofurfuryle, le méthacrylate de méthyle, le méthacrylate d'éthyle, le méthacrylate de propyle, le méthacrylate de n-butyle, le méthacrylate d'isobutyle, le méthacrylate de n-octyle, le méthacrylate de dodécyle, le méthacrylate de stéaryle et le méthacrylate de 2-éthylhexyle; le 5-hexénoate de méthyle; le styrène, l'o-méthylstyrène, le m-méthylstyrène, le p-méthylstyrène, l'α-méthylstyrène, le p-méthoxystyrène, le p-tert-butylstyrène, le p-phénylstyrène, l'o-chlorostyrène, le m-chlorostyrène et le p-chlorostyrène; le chlorure de vinyle, l'acétate de vinyle, l'acrylonitrile, l'acrylamide et la N-vinylpyrrolidone et (3) de 1 à 20% en masse d'un motif monomère de réticulation et
(C) 0,01 à 5 parties en masse d'une résine polyoléfinique modifiée par un acide présentant un indice d'acide compris entre 1,0 et 100 mg de KOH/g comme spécifié dans la norme JIS K0070.

2. Composition de résine polyoléfinique comprenant:
(A) 100 parties en masse d'une résine polyoléfinique,
(B) 0,05 à 1,0 partie en masse de particules d'un polymère réticulé présentant une taille particulaire moyenne en volume comprise entre 0,3 et 10 µm et
(C) 0,01 à 5 parties en masse d'une résine polyoléfinique modifiée par un acide présentant un indice d'acide compris entre 1,0 et 100 mg de KOH/g comme spécifié dans la norme JIS K0070,
dans laquelle lesdites particules (B) de polymère réticulé sont des particules présentant une structure multicouche dont la couche la plus externe est en un copolymère comprenant (1) de 1 à 50% en masse d'un motif monomère polymérisable par voie radicalaire contenant un groupe carboxyle dans la molécule, (2) de 49 à 98% en masse d'un motif monomère polymérisable par voie radicalaire choisi dans le groupe constitué par l'acrylate de méthyle, l'acrylate d'éthyle, l'acrylate de n-butyle, l'acrylate d'isobutyle, l'acrylate de dodécyle, l'acrylate de stéaryle, l'acrylate de 2-éthylhexyle, l'acrylate de tétrahydrofurfuryle, le méthacrylate de méthyle, le méthacrylate d'éthyle, le méthacrylate de propyle, le méthacrylate de n-butyle, le méthacrylate d'isobutyle, le méthacrylate de n-octyle, le méthacrylate de dodécyle, le méthacrylate de stéaryle et le méthacrylate de 2-éthylhexyle; le 5-hexénoate de méthyle; le styrène, l'o-méthylstyrène, le m-méthylstyrène, le p-méthylstyrène, l'α-méthylstyrène, le p-méthoxystyrène, le p-tert-butylstyrène, le p-phénylstyrène, l'o-chlorostyrène, le m-chlorostyrène et le p-chlorostyrène; le chlorure de vinyle, l'acétate de vinyle, l'acrylonitrile, l'acrylamide et la N-vinylpyrrolidone et (3) de 1 à 20% en masse d'un motif monomère de réticulation.

3. Composition de résine polyoléfinique selon la revendication 1, dans laquelle ladite résine polyoléfinique (A) est une résine de polypropylène.

4. Film en polyoléfine étiré obtenu en étirant au moins d'une manière uniaxiale un film en une composition de résine polyoléfinique comprenant:
(A) 100 parties en masse d'une résine polyoléfinique,
(B) 0,05 à 1,0 partie en masse de particules d'un polymère réticulé présentant une taille particulaire moyenne en volume comprise entre 0,3 et 10 µm, lesdites particules de polymère réticulé comprenant (1) de 1 à 50% en masse d'un motif monomère polymérisable par voie radicalaire contenant un groupe carboxyle dans la molécule, (2) de 49 à 98% en masse d'un motif monomère polymérisable par voie radicalaire choisi dans le groupe constitué par l'acrylate de méthyle, l'acrylate d'éthyle, l'acrylate de n-butyle, l'acrylate d'isobutyle, l'acrylate de dodécyle, l'acrylate de stéaryle, l'acrylate de 2-éthylhexyle, l'acrylate de tétrahydrofurfuryle, le méthacrylate de méthyle, le méthacrylate d'éthyle, le méthacrylate de propyle, le méthacrylate de n-butyle, le méthacrylate d'isobutyle, le méthacrylate de n-octyle, le méthacrylate de dodécyle, le méthacrylate de stéaryle et le méthacrylate de 2-éthylhexyle; le 5-hexénoate de méthyle; le styrène, l'o-méthylstyrène, le m-méthylstyrène, le p-méthylstyrène, l'α-méthylstyrène, le p-méthoxystyrène, le p-tert-butylstyrène, le p-phénylstyrène, l'o-chlorostyrène, le m-chlorostyrène et le p-chlorostyrène; le chlorure de vinyle, l'acétate de vinyle, l'acrylonitrile, l'acrylamide et la N-vinylpyrrolidone et (3) de 1 à 20% en masse d'un motif monomère de réticulation et
(C) 0,01 à 5 parties en masse d'une résine polyoléfinique modifiée par un acide présentant un indice d'acide compris entre 1,0 et 100 mg de KOH/g comme spécifié dans la norme JIS K0070.

5. Film en polyoléfine étiré selon la revendication 4, dans lequel ladite résine polyoléfinique (A) est une résine de polypropylène.

6. Film composite étiré d'une manière biaxiale comprenant une couche de base comprenant uniquement ou principalement un polymère de propylène cristallin sur au moins l'un des côtés de laquelle on prévoit une couche en une composition comprenant:
(A) 100 parties en masse d'un polymère de propylène,
(B) 0,05 à 1,0 partie en masse de particules d'un polymère réticulé présentant une taille particulaire moyenne en volume comprise entre 0,3 et 10 µm, lesdites particules de polymère réticulé comprenant (1) de 1 à 50% en masse d'un motif monomère polymérisable par voie radicalaire contenant un groupe carboxyle dans la molécule, (2) de 49 à 98% en masse d'un motif monomère polymérisable par voie radicalaire choisi dans le groupe constitué par l'acrylate de méthyle, l'acrylate d'éthyle, l'acrylate de n-butyle, l'acrylate d'isobutyle, l'acrylate de dodécyle, l'acrylate de stéaryle, l'acrylate de 2-éthylhexyle, l'acrylate de tétrahydrofurfuryle, le méthacrylate de méthyle, le méthacrylate d'éthyle, le méthacrylate de propyle, le méthacrylate de n-butyle, le méthacrylate d'isobutyle, le méthacrylate de n-octyle, le méthacrylate de dodécyle, le méthacrylate de stéaryle et le méthacrylate de 2-éthylhexyle; le 5-hexénoate de méthyle; le styrène, l'o-méthylstyrène, le m-méthylstyrène, le p-méthylstyrène, l'α-méthylstyrène, le p-méthoxystyrène, le p-tert-butylstyrène, le p-phénylstyrène, l'o-chlorostyrène, le m-chlorostyrène et le p-chlorostyrène; le chlorure de vinyle, l'acétate de vinyle, l'acrylonitrile, l'acrylamide et la N-vinylpyrrolidone et (3) de 1 à 20% en masse d'un motif monomère de réticulation et
(C) 0,01 à 5 parties en masse d'une résine polyoléfinique modifiée par un acide présentant un indice d'acide compris entre 1,0 et 100 mg de KOH/g comme spécifié dans la norme JIS K0070.

7. Film composite étiré d'une manière biaxiale comprenant une couche de base comprenant uniquement ou principalement un polymère de propylène cristallin sur au moins l'un des côtés de laquelle on prévoit une couche en une composition comprenant:
(A) 100 parties en masse d'un copolymère de propylène aléatoire,
(B) 0,05 à 1,0 partie en masse de particules d'un polymère réticulé présentant une taille particulaire moyenne en volume comprise entre 0,3 et 10 µm, lesdites particules de polymère réticulé comprenant (1) de 1 à 50% en masse d'un motif monomère polymérisable par voie radicalaire contenant un groupe carboxyle dans la molécule, (2) de 49 à 98% en masse d'un motif monomère polymérisable par voie radicalaire choisi dans le groupe constitué par l'acrylate de méthyle, l'acrylate d'éthyle, l'acrylate de n-butyle, l'acrylate d'isobutyle, l'acrylate de dodécyle, l'acrylate de stéaryle, l'acrylate de 2-éthylhexyle, l'acrylate de tétrahydrofurfuryle, le méthacrylate de méthyle, le méthacrylate d'éthyle, le méthacrylate de propyle, le méthacrylate de n-butyle, le méthacrylate d'isobutyle, le méthacrylate de n-octyle, le méthacrylate de dodécyle, le méthacrylate de stéaryle et le méthacrylate de 2-éthylhexyle; le 5-hexénoate de méthyle; le styrène, l'o-méthylstyrène, le m-méthylstyrène, le p-méthylstyrène, l'α-méthylstyrène, le p-méthoxystyrène, le p-tert-butylstyrène, le p-phénylstyrène, l'o-chlorostyrène, le m-chlorostyrène et le p-chlorostyrène; le chlorure de vinyle, l'acétate de vinyle, l'acrylonitrile, l'acrylamide et la N-vinylpyrrolidone et (3) de 1 à 20% en masse d'un motif monomère de réticulation et
(C) 0,01 à 5 parties en masse d'une résine polyoléfinique modifiée par un acide présentant un indice d'acide compris entre 1,0 et 100 mg de KOH/g comme spécifié dans la norme JIS K0070.

8. Film composite étiré d'une manière biaxiale selon la revendication 7, dans lequel ledit copolymère de propylène aléatoire possède (1) une température de pic de fusion T_{P}, telle que mesurée par analyse calorimétrique à balayage différentiel (ACD), comprise entre 110°C et 140°C, (2) une température de fin de fusion T_{E}, telle que mesurée par ACD, satisfaisant à la relation: T_{E} - T_{P} ≤ 8°C et (3) une aptitude à l'extraction par l'o-dichlorobenzène inférieure ou égale à 2,0% en masse à 40°C.

9. Film composite étiré d'une manière biaxiale selon la revendication 7, dans lequel ledit copolymère de propylène aléatoire est un copolymère aléatoire de propylène et d'éthylène ou un copolymère aléatoire de propylène, d'éthylène et de butène-1.

10. Film composite étiré d'une manière biaxiale selon la revendication 8, dans lequel ledit copolymère de propylène aléatoire est un copolymère aléatoire de propylène et d'éthylène ou un copolymère aléatoire de propylène, d'éthylène et de butène-1.
